# EUROPÄISCHE PATENTANMELDUNG

(11) **EP 4 796 798 A1**
(43) Veröffentlichungstag der Anmeldung: **26.08.2026**
(21) Anmeldenummer: 25159519.5
(22) Anmeldetag: 21.02.2025
(51) Int. Cl.: F16B 19/10

(54) **BLINDNIET**

(71) Anmelder: SFS Group Germany GmbH, 61440 Oberursel (DE)
(72) Erfinder: Hammerschmidt, Malte, 33165 Lichtenau (DE); von der Heide, Carsten Richard, 63329 Egelsbach (DE); Neidhardt, Christopher, 63150 Heusenstamm (DE)
(74) Vertreter: Keil & Schaafhausen Patentanwälte PartGmbB

(57) **Zusammenfassung**

Es wird ein Blindniet mit einem Hohlniet (2) und einem in dem Hohlniet (2) geführten Nietdorn (5) beschrieben, wobei der Hohlniet (2) einen Setzkopf (3) mit einer Setzkopföffnung (30) und einen sich an den Setzkopf (3) anschließenden Hohlnietschaft (4) aufweist und wobei der Nietdorn (5) einen Nietdornkopf (6), einen Nietdornkopfschaft (60), einen Zugdorn (7) und einen zwischen dem Nietdornkopfschaft (60) und dem Zugdorn (7) ausgebildeten Verriegelungsbereich (8) aufweist. Der Zugdorn (7) ist axial bewegbar in der Setzkopföffnung (30) geführt. Der Nietdornkopfschaft (60) ist bei Ausüben einer axialen Zugkraft (Z) auf den Zugdorn (7) unter Kaltverformung in einen Schaftbereich (31) des Hohlniets (2) einziehbar, bis der Verriegelungsbereich (8) an und/oder in dem Setzkopf (3) positioniert ist. Der Hohlniet (2) weist einen Umformformbereich (32) zum Ausbilden eines Schließkopfs (33) auf, wobei eine Umformsteifigkeit des Umformbereichs (32) kleiner ist als eine Umformsteifigkeit des Schaftbereichs (31). Der Nietdornkopf (6) hat einen Nietdornkopfflansch (61), der mit einem Nietdornkopfabsatz (62) radial nach außen von dem Nietdornkopfschaft (60) vorsteht und bei einer axialen Bewegung des Nietdorns (5) an einer offenen Stirnseite (63) des Umformbereichs (32) des Hohlnietschafts (4) angreift, um den Schließkopf (33) durch Umformen des Umformbereichs (32) auszubilden.

## Beschreibung

Die Erfindung betrifft einen Blindniet mit einem Hohlniet und einem in dem Hohlniet geführten Nietdorn. Der Hohlniet weist einen Setzkopf mit einer axialen Setzkopföffnung und einen sich an den Setzkopf in axialer Richtung anschließenden Hohlnietschaft auf. Der Nietdorn weist einen Nietdornkopf, einen sich von dem Nietdornkopf in axialer Richtung erstreckenden Nietdornkopfschaft, einen sich in axialer Richtung erstreckenden Zugdorn (der in diesem Text auch synonym als Nietdornschaft bezeichnet wird) und einen zwischen dem Nietdornkopfschaft und dem Zugdorn ausgebildeten Verriegelungsbereich auf. Der Zugdorn ist in axialer Richtung bewegbar in der Setzkopföffnung geführt, und der Setzkopf und der Nietdornkopf sind in axialer Richtung auf verschiedenen Seiten des Hohlnietschafts angeordnet.

Ein Kopfschaftdurchmesser des Nietdornkopfschafts ist größer als ein Innendurchmesser im an den Setzkopf anschließenden Schaftbereich des Hohlniets und derart bemessen, dass der Nietdornkopfschaft bei Ausüben einer axialen Zugkraft auf den Zugdorn unter Kaltverformung von Schaftbereich und/oder Nietdornkopfschaft aufgrund eines radialen Drucks in den Schaftbereich des Hohlniets einziehbar ist, bis der Verriegelungsbereich des Nietdorns an oder in dem Setzkopf des Hohlniets positioniert ist.

Eine solche Nietverbindung ist grundsätzlich aus der WO 2012/010858 A1 als gattungsbildendem Stand der Technik bekannt. Bei dieser Art der Nietverbindung wird das Befestigungs- oder Fügegut im Wesentlichen kraftschlüssig gehalten. Dies ist für viele Nietverbindungen ausreichend. Bei Nietverbindungen, die starken mechanischen Belastungen und/oder Erschütterungen ausgesetzt sind, kommt es vor, dass sich die Nietverbindung durch Relativbewegungen von Hohlniet und Nietdorn lockert oder löst.

Im vorgeschlagenen Blindniet ist der Kopfschaftdurchmesser ein Außendurchmesser des Nietdornkopfschafts. Der Kopfschaftdurchmesser ist größer als der Innendurchmesser des Schaftbereichs des Hohlniets und kleiner als der Außendurchmesser des Schaftbereichs des Hohlniets. Die axiale Länge des Nietdornkopfschafts ist vorzugsweise größer als die axiale Länge des Schaftbereichs des Hohlnietschafts. Bei einem gesetzten Blindniet ist der Nietdornkopfschaft in jedem Fall oder zumindest in typischen Anwendungssituationen in den Schaftbereich eingezogen und ragt aus dem Schaftbereich hinaus bis in den Umformbereich bzw. den aus dem Umformbereich gebildeten Schließkopf.

In typischen Anwendungen von Blindnieten bspw. aus metallischen Werkstoffen (wie einem Nietdorn und einem Hohlniet aus Aluminium oder Aluminiumlegierungen und einem Außendurchmesser des Hohlniets im Schaftbereich zwischen etwa 0,2 cm und 2,0 cm oder zwischen etwa 0,3 cm bis 1,3 cm), kann das Verhältnis der Differenz von Außendurchmesser im Schaftbereich und Innendurchmesser im Umformbereich und der Differenz von Außendurchmesser im Schaftbereich und Innendurchmesser im Schaftbereich größer als 0,5 sein, gemäß einer bevorzugten Ausführungsform im Bereich zwischen etwa 0,6 und 0,9 und besonders bevorzugt etwa im Bereich zwischen 0,7 und 0,8 liegen. Bei den meisten Anwendungen sollte die Wandstärke des Hohlniets im Schaftbereich beim Einziehen des Nietdornkopfschafts auf nicht weniger als die Hälfte der Ausgangswandstärke reduziert werden. Sonst kann, insbesondere bei einer Anwendung in Bauteilen mit hoher Steifigkeit, der Lochleibungsdruck zu hoch und der Blindniet kann nicht vollständig gesetzt werden, weil der Nietdorn während des Setzens im Hohlniet verklemmt und zu früh und/oder an einer falschen Stelle (d.h. nicht an einer definierten Sollbruchstelle) abreißt.

Grundsätzlich ist dem Fachmann bekannt, dass die genauen geometrischen Verhältnisse dieser Komponenten von der Festigkeit der für den Hohlniet und den Nietdorn verwendeten Materialien, den zu erreichenden Zug-, Halte- und/oder Scherkräften der Nietverbindung und/oder weiteren Eigenschaften der Nietverbindung (bspw. dem Fließverhalten der Stoffe bei den Setzkräften, Dichtheit der zu erreichenden Nietverbindung) abhängen. Der Fachmann wird aufbauend auf der hier beschriebenen Lehre für Nietverbindungen übliche Materialen und Dimensionen der einzelnen Komponenten anwenden und durch Versuche eine dem Einsatzweck geeignete Konfiguration auswählen.

Eine andere Art von Nietverbindung ist bspw. aus der EP 3315796 A1 bekannt, bei der das Befestigungs- oder Fügegut formschlüssig zwischen einem Setzkopf und einem gegenüberliegend zu dem Setzkopf durch Umformen erzeugten Schließkopf formschlüssig eingeklemmt wird. Hierbei kommt es zu keiner kraftschlüssigen Verbindung zwischen dem Blindniet und dem Befestigungs- oder Fügegut.

Aufgabe der Erfindung ist es eine verbesserte Blindnietverbindung vorzuschlagen.

Diese Aufgabe wird durch einen Blindniet mit den Merkmalen des Anspruchs 1 gelöst. Dabei wird vorgesehen, dass der Hohlniet anschließend an den Schaftbereich auf der dem Setzkopf abgewandten Seite einen Umformformbereich zum Ausbilden eines Schließkopfs aufweist, wobei eine Umformsteifigkeit des Umformbereichs kleiner ist als eine Umformsteifigkeit des Schaftbereichs. Bei Aufbringen einer Setzkraft auf den Blindniet verformt sich damit der Umformbereich des Hohlniets schneller als der Schaftbereich des Hohlniets. Hierdurch bildet sich ein Schließkopf im Umformbereich aus. Die unterschiedliche Umformsteifigkeit kann erfindungsgemäß auf verschiedene Arten erreicht werden, bspw. durch einen dünneren Wandungsquerschnitt (Wandstärke) des Hohlniets im Umformbereich als im Schaftbereich, durch unterschiedliche Wärmebehandlung und/oder durch Kaltverfestigung.

Gemäß einer erfindungsgemäß bevorzugten Ausführungsform kann, insbesondere zum Ausbilden einer kleineren Umformsteifigkeit des Umformbereichs als des Schaftbereichs, ein Innendurchmesser des Umformbereichs größer als ein Innendurchmesser des Schaftbereichs sein. Vorzugsweise sind der Außendurchmesser des Hohlnietschafts im Umformbereich und im Schaftbereich (im Rahmen von Fertigungstoleranzen, wie bspw. einem Mehrstufenpressen des Hohlniets) gleich, ggf. abgesehen von ein- oder ausgeprägten Konturen im Umformbereich und/oder Schaftbereich. Gemäß einer bevorzugten Ausführung kann der Hohlnietschaft eine zylindrische Grundform mit gleichmäßigem Außendurchmesser aufweisen. Dies hat den Vorteil, dass der Hohlniet einfach in Öffnungen von Fügegut oder Befestigungsgut eingesteckt werden kann. Der Begriff "zylindrische Grundform" schließt ein Ausbilden von Prägungen oder anderen Formgebebungen (wie Rampen, Rändel und/oder polygonalen Oberflächenstrukturen, bspw. hexagonalen oder oktogonalen Strukturen in Umfangsrichtung etwa als Verdrehsicherung) mit ein. Im Umformbereich des Hohlniets können geeignete Rampen bspw. das Ausbilden des Schließkopfes steuern und beeinflussen, die sich ggf. teilweise bis in den Schaftbereich des Hohlniets erstrecken können.

Erfindungsgemäß kann die Wandstärke des Hohlnietschafts im Umformbereich kleiner sein als die die Wandstärke des Hohlnietschafts im Schaftbereich. Dies begünstigt das Ausbilden des Schließkopfes beim Umformen des Umformbereichs. Erfindungsgemäß kann es vorteilhaft sein, wenn der Innendurchmesser der Setzkopföffnung des Setzkopfs kleiner ist als der Innendurchmesser des Schaftbereichs. Dies erleichtert des Führen des Nietdorns in dem Hohlniet. In diesem Zusammenhang kann erfindungsgemäß vorgesehen sein, dass der Zugdorndurchmesser des Zugdorns dem Innendurchmesser der Setzkopföffnung entspricht. Hierdurch erfolgt automatische eine Führung des Nietdorns in dem Hohlniet.

Ferner ist erfindungsgemäß vorgesehen, dass der Nietdornkopf an dem dem Verriegelungsbereich abgewandten Ende des Nietdornkopfschafts einen Nietdornkopfflansch aufweist, der mit einem Nietdornkopfabsatz radial nach außen von dem Nietdornkopfschaft vorsteht und bei einer axialen Bewegung des Nietdorns an einer offenen Stirnseite des Umformbereichs des Hohlnietschafts angreift, um bei einem weiteren Ausüben einer Zugkraft auf den Zugdorn den Schließkopf durch Umformen des Umformbereichs auszubilden.

Hierdurch wird das Fügegut oder Befestigungsgut zwischen dem Setzkopf des Hohlniets und dem aus dem Umformbereich des Hohlniets gebildeten Schließkopf festgeklemmt und der Hohlniet in dem Fügegut oder Befestigungsgut gesetzt.

Vorzugsweise ist der Außendurchmesser des Nietdornkopfflanschs nicht größer als der Außendurchmesser des Hohlnietschafts, respektive als der Außendurchmesser des Umformbereichs und des Schaftbereichs. Gemäß einer bevorzugten Ausführungsform der Erfindung kann der Außendurchmesser des Nietdornkopfflanschs gleich dem Außendurchmesser des Hohlnietschafts sein, damit der Blindniet (Hohlniet und Nietdorn zusammen) einfach durch eine Öffnung des Fügeguts oder Befestigungsguts gesteckt werden kann.

Der Blindniet wird vor dem Setzen des Blindniets durch eine Öffnung des Fügeguts oder Befestigungsguts geführt, so dass der Setzkopf an dem Fügegut oder Befestigungsgut anliegt. Der Setzkopf kann erfindungsgemäß als Senkkopf oder Flachkopf ausgebildet sein, abhängig von der Art und/oder Beschaffenheit des Fügeguts oder Befestigungsguts. Erfindungsgemäß bevorzugt entspricht der Außendurchmesser des Hohlnietschafts dem Innendurchmesser der Öffnung in dem Fügegut oder Befestigungsgut. Damit ist gemeint, dass der Hohlnietschaft mit einem benötigten Montagespiel in die Öffnung des Fügeguts oder Befestigungsgut einschoben werden kann, abgesehen von diesem Montagespiel aber im Wesentlichen lose am Innenumfang der Öffnung anliegt.

Beim Setzen des Blindniets wird eine Zugkraft Z auf Zugdorn ausgeübt und der Setzkopf mit einer Gegengegenkraft G gestützt. So wird der Nietdornkopf des Nietdorns in Richtung des Setzkopfs gezogen. Dabei wird der Nietdornkopfschaft des Nietdorns in den Schaftbereich des Hohlniets gezogen und weitet den Schaftbereich des Hohlniets radial nach außen. Um einen leichteres Einziehen des Nietdornkopfschafts in den Schaftbereich des Hohlniets zu ermöglichen, kann an dem dem Nietdornkopfflansch entgegensetzten Ende des Nietdornkopfschafts eine Einschlupfschräge ausgebildet sein, die den Kopfschaftdurchmesser bspw. auf einen Verriegelungskopfdurchmesser reduziert. Der Verriegelungskopfdurchmesser kann gemäß einer Ausführungsform dem Inndurchmesser des Hohlniets im Schaftbereich entsprechen oder kleiner sein.

In Folge wird der Schaftbereich durch Kaltverformung gegen die Innenwand der Öffnung des Fügeguts oder Befestigungsguts gedrückt. Es erfolgt ein Kraftschluss zwischen dem Blindniet und dem Fügegut respektive Befestigungsgut. Das Fügegut oder Befestigungsgut wird so kraftschlüssig an dem Blindniet gehalten. Durch das kraftschlüssige Halten aufgrund des radialen Weitens des Schaftbereichs wird die Öffnung in dem Fügegut oder Befestigungsgut (vorzugsweise sogar abdichtend) geschlossen. Es kommt in diesem Schaftbereich also zu einer Weitung des Hohlnietschafts und einem Anlegen und Anpressen des Hohlnietschafts an der bzw. an die Mantelfläche der Öffnung des Fügeguts oder Befestigungsguts. Im Falle von Fügegut, also mindestens zwei separaten Materialen, die durch den Blindniet aneinander festgelegt werden, erfolgt damit ein kraftschlüssiges Halten des Fügeguts. Erfindungsgemäß entsteht also ein definierter Lochleibungsdruck und ein besonders gleichmäßig umlaufender Kontakt des Hohlnietschafts im Außenbereich des Schaftbereichs innerhalb der Öffnung (bspw. einer Bohrung) des Fügeguts (mehr als ein Materialteil) oder Befestigungsguts (nur ein Materialteil). Hierdurch können eine hohe Dauerfestigkeit, eine hohe Kontaktgüte und/oder eine Abdichtung erreicht werden. Außerdem kann eine Korrosion (Spaltkorrosion) in der Öffnung des Fügeguts oder Befestigungsguts verhindert oder reduziert werden, weil eine kleinere offene Angriffsfläche für chemisch aktive Medien (umfassend auch bspw. Waser oder Sauerstoff) am Hohlniet besteht,

Zur Vereinfachung der Sprache werden im Folgenden der Begriff Fügegut auch für ein Materialteil (an sich Befestigungsgut) oder mehrere Materialteile (Fügegut im vordefinierten Sinne) verwendet, insbesondere wenn es für die Art der Nietverbindung unerheblich ist, ob der Blindniet an einem, zwei oder mehr Materialien festgelegt wird. Diese Anwendungen sind dem Fachmann vertraut.

Sobald während des Zugs an dem Zugdorn mit einer Zugkraft der Nietdornkopfabsatz an der offenen Stirnseite des Umformbereichs des Hohlnietschafts angreift, wird der Umformbereich des Hohlniets unter Ausbildung des Schließkopfs an einer dem Nietdornkopf zugewandten Oberfläche des Fügeguts oder Befestigungsguts faltenartig radial von dem Nietdorn weg ausgebildet, wobei sich der Schließkopf auf der Oberfläche des Fügeguts oder Befestigungsguts ausbildet. Das Fügegut wird entsprechend - zusätzlich zu dem kraftschlüssigen Halten des Blindniets in der Öffnung des Fügeguts zwischen dem Setzkopf und dem Schließkopf eingeklemmt und so auch formschlüssig gehalten. Hierdurch werden erfindungsgemäß besonders große Haltekräfte des Blindniets erreicht und die Nietverbindung besonders gesichert, nämlich kraftschlüssig und formschlüssig. In einer Ausführungsform kann vorgesehen werden, dass der Schließkopf auf der dem Nietdornkopf zugewandten Seite des Fügeguts eine vergleichsweise große Auflagefläche ausbildet, deren Durchmesser vorzugsweise etwa dem größten Durchmesser des Setzkopfes entsprechen kann. Hierdurch werden auftretende Kräfte optimal verteilt und eine kleinstmögliche Flächenpressung auf der Materialoberfläche des Fügeguts erzeugt. Dies kann für bestimmte Materialien des Fügeguts, wie etwa empfindliche Materialien mit Kohlefasern wie Kohlenfaserverbundstoffe (CFK) vorteilhaft oder notwendig sein. Gemäß einer bevorzugten Ausbildung dieses erfindungsgemäßen Aspekts kann der Durchmesser des Schließkopfs (nach dem Setzen des Blindniets mindestens etwa dem 0,7-fachen des größten Durchmessers des Setzkopfs entsprechen.

Gemäß einer weiteren Ausführungsform der Erfindung kann der Verriegelungsbereich des Nietdorns einen Verriegelungskopf aufweisen, wobei ein Verrieglungskopfdurchmesser kleiner als der oder etwa gleich dem Innendurchmesser im Schaftbereich (und auch als der Innendurchmesser im Umformbereich) des Hohlniets und größer ist als ein Innendurchmesser der Setzkopföffnung sein kann, die in dem Setzkopf an einem Verriegelungsabsatz anschließend an den Schaftbereich des Hohlniets ausgebildet ist (auf der dem Nietdornkopf abgewandten Seite). Hierdurch wird der Setzweg des Blindniets begrenzt, indem der Verriegelungskopf an dem Verriegelungsabsatz des Hohlniets anliegt bzw. während des Setzvorgangs anstößt und dort etwa mittels einer Verriegelungsmechanik und/oder durch Verformung verriegelt wird. Während dieser Verriegelung, die vorzugsweise während des Setzens des Blindniets, bspw. mittels eines Setzwerkzeugs, erfolgt, kann sich der Nietdorn und der Nietdornkopf weiter in Richtung des Setzkopfs (in Richtung des Setzbewegung bzw. Zug-/Setzkraft) bewegen, bis eine Verriegelung (bspw. durch Kaltverformen und/oder mechanisch) erfolgt ist und die Bewegung des Nietdorns stoppt. Dies kann insbesondere an einer Position des Nietdorns erfolgen, an der der Zugdorn an einer Sollbruchstelle abreißt.

Damit ist der Verriegelungsbereich des Nietdorns an und/oder in dem Setzkopf des Hohlniets positioniert und fixiert. Insbesondere kann der Verriegelungsbereich des (gesetzten) Nietdorns vollständig oder zumindest teilweise in dem Setzkopf des Hohlniets positioniert sein. Vorzugsweise kann die Setzkopföffnung bei gesetztem Hohlniet, d.h. bei Erreichen des Endes des Setzwegs, gemäß einer bevorzugten Ausführungsform durch den Verriegelungsbereich abdichtend verschlossen sein. Damit wird insgesamt ein abdichtendes Setzen des Blindniets in dem Fügegut erreicht. Bspw. kann ein erfindungsgemäßer Hohlniet auch, unabhängig von einem Fügevorgang mit mehreren Materialien (Fügegut) auch nur zu einem zuverlässigen abdichtenden Verschließen von Öffnungen in dem Fügegut verwendet werden, d.h. auch bei einem Befestigungsgut.

Es ist also ein erfindungsgemäß bevorzugtes Merkmal, dass der vorgeschlagene Blindniet an einem Füge- oder Befestigungsgut immer mit demselben Setzweg gesetzt wird, unabhängig davon, ob durch ein Setzwerkzeug ein vorgegebener Setzweg und/oder eine vorgegebene Setzkraft eingestellt werden, solange der Setzweg und/oder die Setzkraft derart eingestellt sind, dass der Verriegelungskopf nach dem Setzen des Blindniets durch Ziehen an dem Zugdorn an dem Verriegelungsabsatz anliegt (und wie vorbeschrieben verriegelt ist). Eine minimale Klemmlänge des Blindniets für ein Fügegut kann sich dadurch ergeben, dass sich das Fügegut bei in eine Öffnung des Fügeguts eingesetztem Blindniet, dessen Setzkopf an einer ersten Oberfläche des Fügeguts anliegt, mit der der ersten Oberfläche gegenüberliegenden zweiten Oberfläche in axialer Richtung beispielsweise bis in den Umformbereich des Hohlnietschafts oder zumindest bis fast an den Umformbereich erstreckt (also noch vor dem Ende des Schaftbereichs in Richtung des Umformbereichs endet, so dass vorzugsweise nach dem Setzen zumindest ein Abschnitt der dem Fügegut zugewandten Oberflächenseite des Schließkopfs an dem Fügegut anliegt).

Eine maximale Klemmlänge ergibt sich dadurch, dass bei Anliegen des Verriegelungskopfs an dem Verriegelungsabsatz durch Einwirken des Nietdornkopfs auf den Umformbereich ein (wirksamer) Schließkopf ausgebildet ist. Die maximale Klemmlänge kann sich gemäß einer bevorzugten Ausführungsform dadurch ergeben, dass der Durchmesser des an der zweiten Oberfläche anliegenden Schließkopfs dem Durchmesser eines Schließkopfs entspricht, der sich für jede Klemmlänge zwischen der maximalen und der minimalen Klemmlänge (auch als gesamter Klemmbereich bezeichnet) ergibt. Als ein entsprechender Durchmesser wird angesehen, wenn der Durchmesser des Schließkopfs für jede beliebige Klemmlänge über den gesamte Klemmbereich im Wesentlichen konstant ist, d.h. nicht um mehr als +/- 15% oder 20%, vorzugweise nicht um mehr als +/- 10% variiert. Dies führt über den gesamten Klemmbereich zu vergleichbaren Setzeigenschaften für den Blindniet und wird insbesondere dadurch erreicht, dass der Setzweg durch den Verriegelungskopf definiert begrenzt wird, unabhängig von der maximal ausgeübten Zugkraft, und zu vergleichbaren Krafteinleitungs- und Kraftübertragungseigenschaften am Fügegut führt.

Gemäß einem weiteren Aspekt der Erfindung kann vorgesehenen sein, dass eine axiale Länge des Verriegelungsbereichs des Nietdorns einer axialen Länge der Setzkopföffnung entspricht. Bei Setzen des Blindniets wird die Setzkopföffnung durch den Verriegelungsbereich des Nietdorns verschlossen und vollständig oder weitestgehend vollständig ausgefüllt. So lassen sich eine vergleichsweise glatte Oberfläche auf der Setzseite des Fügeguts oder Befestigungsguts bei einer Vernietung erreichen und bspw. eine Aerodynamik verbessern. Zum Auffüllen von verbleibenden Unebenheiten auf der Oberfläche der Setzseite im Bereich der Setzkopföffnung wird gemäß dieser Ausführungsform signifikant weniger Spachtelmasse zum Füllen der verbleibenden Setzkopföffnung benötigt als im Stand der Technik. Ein geringeres Füllvolumen für Spachtelmasse spart Aufwand und vermeidet das Einfallen der Spachtelmasse mit entstehenden optischen Makeln. Dies gilt insbesondere bei einem als Senkkopf ausgebildeten Setzkopf.

Im Falle eines Ringabsatzes, der in Axialrichtung von der dem Fügegut abgewandten Seite des Setzkopfes vorsteht und während des Setzvorgangs in den Setzkopf eingedrückt wird (Aufbau und Funktion des Ringabsatzes werden später noch ausführlicher beschrieben), und/oder eines (bereits beschriebenen) Relativwegs des Nietdorns beim Verriegeln des Nietdorns und/oder einer axialen Ausdehnung eines in dem Setzkopf an dem Verriegelungsabsatz anliegenden Bereichs des Verriegelungskopfs, der nicht in den Setzkopf eingezogen wird, werden diese axialen Abschnitte des Setzkopfs und/oder des Verriegelungskopfs für ein Entsprechen der axialen Länge von Setzkopföffnung und Verriegelungsbereich nicht berücksichtigt. Erfindungsgemäß entsprechen die axiale Länge des Verriegelungsbereichs des Nietdorns und die axiale Länge der Setzkopföffnung einander, wenn der nach dem Setzen des Niets in der Setzkopföffnung angeordnete Abschnitt des Verriegelungsbereichs in axialer Richtung genauso lang ist wie die Setzkopföffnung. Hierdurch wird auf der dem Schließkopf abgewandten Oberfläche des Setzkopfs nach dem Setzen eine glatte Oberfläche auf dem Fügegut ausgebildet, insbesondere wenn der Setzkopf als Senkkopf ausgebildet ist.

Außerdem füllt der Nietdorn den Setzkopf (der als Senkkopf oder Flachkopf ausgebildet sein kann) nach dem Setzen des Blindniets weitestgehend vollständig aus (insbesondere mit dem Verriegelungsbereich des Nietdorns) und trägt zur mechanischen Stabilität des Setzkopfes bei, der nicht zusammengedrückt oder zerquetscht wird. Dies erhöht die Tragfähigkeit der Nietverbindung. Erfindungsgemäß lässt sich die axiale Länge des in den Setzkopf aufgenommenen Verriegelungsbereichs des Nietdorns und die axiale Länge der Setzkopföffnung dadurch besonders genau abstimmen, dass der Verriegelungskopf des Nietdorns an dem Verriegelungsabsatz des Hohlniets anstößt und die Verriegelung ausbildet. Der Setzweg wird dadurch definiert begrenzt.

Es kann besonders vorteilhaft sein, wenn gemäß einer erfindungsgemäßen Ausführungsform der Verrieglungsbereich des Nietdorns den Verriegelungskopf an dem dem Nietdornkopfschaft zugwandten Ende des Verriegelungsbereichs aufweist. So ist der Verriegelungsbereich zuverlässig in der Setzkopföffnung positioniert, wenn der Setzweg durch Anliegen des Verriegelungskopfs an dem Verriegelungsabsatz und Ausbilden der Verriegelung begrenzt wird.

Ergänzend hierzu oder unabhängig davon kann gemäß einer weiteren Ausführungsform der Verrieglungsbereich des Nietdorns an dem dem Zugdorn zugewandten Ende eine Sollbruchstelle aufweisen, die beispielsweise als Nut in einem Verriegelungsschaft im Verriegelungsbereich des Nietdorns ausgebildet sein kann. Wenn der Zugdorn das Ende des Setzwegs erreicht und weiterhin die Zugkraft Z auf den Nietdorn aufgebracht wird, reißt der Zugdorn an der Sollbruchstelle von dem in dem Setzkopf gehaltenen Verriegelungsbereich ab. Hierdurch wird der Setzvorgang des Blindniets beendet. Die Nut der Sollbruchstelle kann als Dreiecksnut ausgebildet sein, vorzugweise als Dreieck mit unterschiedlich langen Schenkeln, wobei der Kürzere der Schenkel auf der Seite des Verriegelungsbereichs ausgebildet sein kann. Entsprechend findet sich der Längere der Schenkel auf der Seite des Zugdorns. Hierdurch wird eine möglichst glatte Oberfläche erreicht. Erfindungsgemäß kann gemäß einer Ausführungsform vorgesehen sein, dass der Kerbgrund der Nut als Radius bzw. gekrümmte Kontur ausgebildet ist. In einer anderen Ausführungsform kann die Kontur der Nut aus anders gestalteten geradlinigen oder gekrümmten Formen bestehen.

Eine besonders bevorzugte Ausführungsform der Erfindung sieht vor, dass in dem Verriegelungsbereich (vorzugsweise in Richtung des Zugdorns unmittelbar) anschließend an den Verriegelungskopf eine Verriegelungsnut ausgebildet ist. Hierdurch wird eine (in dem Setzkopf) innenliegende formschlüssige Verriegelung ausgebildet. Diese innenliegende Verriegelung ist gegenüber äußeren Einflüssen geschützt und sichert den Nietdorn in dem Hohlniet gegen eine Bewegung relativ zu dem Hohlniet, die zu einem Lockern der Nietverbindung führen könnte. Daher ist eine derart gesicherte Nietverbindung besonders stabil und langlebig, gerade auch in Anwendungsgebieten, in denen starke Erschütterungen auf die gesetzten Blindniete einwirken, wie bspw. bei Flugzeugen. Anders als bei einer von außen betätigbaren mechanischen Verriegelung (wie beispielsweise bei den Normen ASNA0079, ASNA0080 und der darin referenzierten Norm NAS1722), werden bei dieser erfindungsgemäßen, innenliegenden Verriegelung keine besonders empfindlichen Mundstückkonturen am Setzgerät benötigt, um eine hohe Prozessstabilität und Wiederholgüte beim Verarbeiten (Setzen) dieser Blindniete zu ermöglichen. Hierdurch wird ein Werkzeugverschleiß an dem Setzgerät minimiert, und es besteht kein Risiko, einen Verschleiß am Mundstück des Setzgeräts zu übersehen, das negative Auswirkung auf die Stabilität der Verriegelungsmechanik hätte.

Bei dem Setzen des Blindniets fließt Material aus dem Setzkopf des Hohlniets in die Verriegelungsnut, insbesondere wenn der Verriegelungskopf am Ende des Setzwegs mit Zugkraft Z beaufschlagt an dem Verriegelungsabsatz anstößt und die Verrieglung erfolgt. Diese innenliegende formschlüssige Verbindung sichert den Nietdorn gegen axiale Verschiebung in dem Hohlniet bei gesetztem Blindniet. Dies gilt insbesondere, wenn die Blindnietverbindung im Gebrauch starken Erschütterungen ausgesetzt ist, bspw. bei Nietverbindungen im Flugzeugbau. Eine solche innenliegende Verbindung ist besonders vorteilhaft, weil diese gegenüber mechanischen Einwirkungen von außen besonders geschützt ist und durch das Fließen des Materials zusätzlich zu einer formschlüssen auch eine kraftschlüssige Verbindung zwischen einer Innenmantelfläche der Setzkopföffnung und einer (allein durch die Verriegelungsnut und ggf. weitere Strukturelemente) strukturierten Außenmantelfläche des Nietdorns im Verriegelungsbereich erreicht wird. Der Nietdorn wird im Bereich des Setzkopfes innenliegend kraft- und vor allem auch formschlüssig verriegelt.

Durch den Nietdornkopf mit dem Nietdornkopfflansch, dessen Nietdornkopfabsatz auch bei einem gesetzten Blindniet mit dem Schließkopf an der offenen Stirnseite des Umformbereichs des Hohlniets anliegt, können so zusätzlich zu dem Hohlniet auch durch den Nietdorn Axialkräfte aufgenommen und übertragen werden, die bei einem gesetzten Blindniet anteilig eine Haltekraft auf den Hohlniet übertragen. Hierdurch werden zwei Effekte erreicht: Zum einen wird ein Anteil der Zugkraft (Setzkraft) als Vorspannkraft erhalten. Ohne die Verriegelung würde ein Teil der Zugspannung bei dem Setzen des Niets nach dem Abbrechen des Zugdorns freigegeben, stände nicht mehr als axialer Kraftanteil in der Nietverbindung zur Verfügung und könnte sogar zum sog. Bounce-Back-Effekt führen, der eine Bewegung der Elemente des Nietdorns, die sich nach dem Abbrechen des Zugdorns an der Sollbruchstelle innerhalb des Hohlnietschaftes, des Fügeguts und der Nietverbindung befinden, in einer der Setzbewegung entgegengesetzten Richtung beschreibt und damit die axiale Klemmkraft der Nietverbindung reduzieren kann. Zum anderen werden axiale Kräfte übertragen, die im Betrieb des gesetzten Hohlniets auf die Nietverbindung wirken. Diese axialen Kräfte werden teilweise durch den Hohlniet (Wandung) und teilweise durch den Nietdorn (Kern) weitergleitet, und nicht ausschließlich durch den Hohlniet (wie bei entsprechenden Nietverbindungen aus dem Stand der Technik ohne entsprechende Verriegelung). Dies erhöht die Stabilität von (gerade mechanisch stark beanspruchten) Nietverbindungen.

Mit Fließen des Materials im Zusammenhang mit dem Setzen der Nietverbindung ist vorzuweise ein Kaltfließen des Materials aufgrund einer Krafteinwirkung gemeint. Das Kaltfließen umfasst erfindungsgemäß eine Umformung unterhalb der Rekristallisationstemperatur des Materials des Blindniets und führt zu einer besonders hohen Festigkeit. Dies kann insbesondere ein Kaltumformen bei Umgebungstemperatur oder ein Halbwarmumformen sein. Bei dem Halbwarmumformen erwärmt man das Werkstück auf eine Temperatur, die immer noch unterhalb der Rekristallisationstemperatur liegt. Hierdurch werden die Vorteile der Warmumformung (leichtere Umformbarkeit und höheres Umformvermögen) mit den Vorteilen des Kaltumformens (Verfestigung, höhere Genauigkeit) verbunden.

Es gibt verschiedene Maßnahmen, die jede für sich oder in Kombination mit weiteren oder allen Maßnahmen das Fließen des Materials und/oder die form- und/oder kraftschlüssige Verbindung von Nietdorn und Hohlniet fördern. Diese werden nachstehend jede für sich beschrieben, können erfindungsgemäß aber jeweils alleine oder in beliebiger Kombination miteinander angewendet werden.

Eine optionale Maßnahme gemäß der Erfindung kann vorsehen, dass der Verriegelungsabsatz des Hohlniets als angeschrägter oder angeschlitzter Absatz ausgeformt ist, wobei das Material des Hohlniets zwischen der Setzkopföffnung und dem angeschrägten oder angeschlitzten Absatz einen ersten spitzen Winkel ausbilden. Dies begünstigt das Einfließen von Material im Bereich des spitzen Winkels von dem Hohlniet in die Verriegelungsnut des Nietdorns beim Setzen des Blindniets.

Eine vergleichbare optionale Maßnahme gemäß der Erfindung kann vorsehen, dass der Verriegelungskopf am Übergang in die Verriegelungsnut als angeschrägter oder angeschlitzter Absatz ausgeformt ist, wobei das Material des Verriegelungskopfes zwischen einer äußeren Mantelfläche des Verriegelungskopfes und der angeschrägten oder angeschlitzten Verriegelungsnut einen zweiten spitzen Winkel ausbilden. Auch dies begünstigt das Einfließen von Material im Bereich des spitzen Winkels von dem Hohlniet in die Verriegelungsnut des Nietdorns beim Setzen des Blindniets.

Die beiden vorbeschrieben Maßnahmen zusammen erzeugen einen besonderen Effekt. Aufgrund der Ausbildung der angeschrägten oder angeschlitzten Absätze in unterschiedlicher axialer Richtung von Hohlniet und Nietdorn bilden die Absätze einander entgegensetzte Spitzen aus, die beim Verschieben des Nietdorns in dem Hohlniet während des Setzens des Blindniets miteinander verzahnen und das Einfließen von Material insbesondere des Hohlniets in die Verriegelungsnut besonders effektiv fördern.

Eine weitere optionale Maßnahme gemäß der Erfindung kann vorsehen, dass ein separates verformbares Verriegelungselement im Schaftbereich des Hohlniets zwischen dem Verriegelungsabsatz des Hohlniets und dem Verriegelungskopf des Nietdorns angeordnet ist, das beim Setzen des Blindniets in die Verriegelungsnut des Nietdorns eingreift und dort verpresst wird. Gemäß bevorzugter Ausführungsformen kann das separate Verriegelungselement als Dichtring aus einem bezogen auf den Hohlniet und den Nietdorn weicheren Metall, als mikroverkapselter Klebstoff und/oder als Klebstoff-Ringkissen ausgebildet sein, wobei der mikroverkapselte Klebstoff oder Klebstoff des Klebstoff-Ringkissens während des kraftbeaufschlagten Setzens des Blindniets austritt und zu einer Verklebung zwischen Hohlniet und Nietdorn im Verriegelungsbereich führt. Das Verkleben führt zu einer weiteren kraftschlüssigen sowie stoffschlüssigen Verbindung und gleichzeitig zu einer Abdichtung.

Eine weitere optionale Maßnahme gemäß der Erfindung kann vorsehen, dass ein Verriegelungsschaft, der sich im Verriegelungsbereich ausgehend von dem Verriegelungskopf oder der Verriegelungsnut in Richtung des Zugdorns erstreckt, einen Verriegelungsschaftdurchmesser aufweist, der größer ist als der Innendurchmesser der Setzkopföffnung und kleiner ist als der Verriegelungskopfdurchmesser. Dabei ist der Verriegelungsschaftdurchmesser derart bemessen, dass der Verriegelungsschaft bei Ausüben einer axialen Zugkraft auf den Zugdorn unter Kaltverformung des Setzkopfs des Hohlniets und/oder Verriegelungsschafts aufgrund eines radialen Drucks in die Setzkopföffnung des Hohlniets einziehbar ist. Durch den erhöhten radialen Druck kann ein Fließen von Material des Hohlniets im Bereich des Setzkopfes in axialer Richtung begünstigt werden. Dies führt schnell zu einem effektiven Ausfüllen der materialfreien Verriegelungsnut im Nietdorn. Das Fließen von Material des Hohlniets im Bereich des Setzkopfes kann optional dadurch weiter begünstigt werden, dass am Übergang von dem Zugdorn mit einem Zugdorndurchmesser zu dem Verriegelungsschaft mit dem Verriegelungsschaftdurchmesser eine Zugdornschräge ausgebildet ist. Die Zugdornschräge erleichtert das Einführen des Verriegelungsschafts in die Setzkopföffnung, indem bei einer axialen Bewegung des Nietdorns in Richtung der Zugkraft Z der radiale Druck auf das Material im Setzkopf stetig erhöht wird. Die Zugdornschräge führt auch zu einer Verhinderung oder Minimierung einer Abschabung von Material in der Setzkopföffnung, das dann für das Ausbilden der Verriegelung fehlen würde. Ferner werden die Oberfläche und mögliche Oberflächenbeschichtungen in der Setzkopföffnung nicht beschädigt. Hier wird dem Entstehen von Abrieb und Verschmutzungen entgegengewirkt. Der Zugdorndurchmesser entspricht vorzugsweise gerade dem Innendurchmesser der Setzkopföffnung.

Ein weiterer, von dem vorbeschriebenen Effekt auch unabhängiger Effekt, kann darin liegen, dass der Setzkopf und die Setzkopföffnung durch Kaltumformen verfestigt werden. Hierdurch wird die Stabilität der Verriegelung des Nietdorns in dem Setzkopf erhöht (sowohl durch Kraftschluss zischen dem Verriegelungsbereich des Nietdorns und der Setzkopföffnung des Setzkopfs als auch durch Formschluss mittels zusätzlich kaltverfestigtem Material, das die Verriegelungsnut ausfüllt. Dazu trägt auch das zusätzliche Material des bereits erwähnten Ringabsatzes durch Kaltverformung bei.

Vorzugsweise kann der größte Außendurchmesser der Zugdornschräge größer sein als Verriegelungsschaftdurchmesser und kleiner als der Verriegelungskopfdurchmesser. Hierdurch kann Material des Setzkopfes auch in axial entgegengesetzter Richtung, bezogen auf die Bewegungsrichtung des Nietdorns beim Setzen des Blindniets, ausweichen, weil im Verriegelungsbereich hinter der Zugdornschräge ein Freiraum entsteht, in den ein Teil des Materials einfließt und in die Verriegelungsnut eintritt.

Durch die vorbeschriebene Verriegelungsnut wird eine besondere sichere innere (d.h. innenliegende) Verriegelung im Setzkopf erreicht, die nach dem Setzen von außen nicht zugänglich ist und daher nicht beeinflussbar ist.

Am Ende des Setzwegs des Blindniets ist die Zugdornschräge vorzugsweise außerhalb des Setzkopfes angeordnet. Dies kann einfacher Weise dadurch erreicht werden, dass die Zugdornschräge zwischen der Sollbruchstelle am Ende des Verriegelungsbereichs und dem Zugdorn angeordnet ist.

Gemäß einer bevorzugten Ausführungsform der Erfindung kann die Verriegelungsnut des Nietdorns bei gesetztem Blindniet im Setzkopf des Hohlniets in einer Radialebene angeordnet sein, die mit der Oberfläche des Fügeguts oder Befestigungsguts auf der Setzseite zusammenfällt oder die innerhalb des Fügeguts oder Befestigungsguts angeordnet ist. Im Bereich der Verriegelungsnut werden bei axialer Belastung aufgrund der formschlüssigen Verzahnung von Nietdorn und Hohlniet hohe Radialkräfte erzeugt, die den Kraftschluss zwischen dem Hohlniet und dem Fügegut oder Befestigungsgut erhöhen. Daher ist es erfindungsgemäß bevorzugt, wenn eine Radialkraft im Bereich der Verriegelungsnut direkt auf die Öffnung in dem Fügegut oder Befestigungsgut übertragen wird bzw. sich dort abstützt.

Eine Radialebene ist definiert als eine Ebene, die senkrecht zu der Axialrichtung des Blindniets ausgerichtet ist. Die Axialrichtung ist durch die Längsachse des Nietdorns und die Längsachse von Hohlnietschaft und Setzkopföffnung definiert, die alle dieselbe Ausrichtung haben. Die Setzseite ist als die Seite des Fügeguts oder Befestigungsguts definiert, auf der der Setzkopf des Blindniets angeordnet ist. Im Falle eines Flachkopfs liegt der Setzkopf auf der Oberfläche des Fügeguts oder Befestigungsguts auf, im Falle eines Senkkopfs ist der Setzkopf in die Oberfläche des Fügeguts oder Befestigungsguts eingelassen.

Gemäß einer speziellen Ausführungsform der Erfindung kann die Verriegelungsnut des Nietdorns bei gesetztem Blindniet in einer Radialebene angeordnet sein, die innerhalb des Fügeguts oder Befestigungsguts verläuft. Hierdurch tragen in diesem Bereich erzeugte Radialkräfte optimal zu einer kraftschlüssigen Verbindung von Blindniet und Fügegut oder Befestigungsgut bei. Unmittelbar ist dies bei einem als Senkkopf ausgebildeten Setzkopf der Fall. Auch bei einem als Flachkopf ausgebildeten Setzkopf kann der Verriegelungsabsatz soweit zurückgesetzt sein, dass der Verriegelungskopf und die Verriegelungsnut bei gesetztem Blindniet innerhalb des Fügeguts oder Befestigungsguts angeordnet sind. Durch diese Ausführungsform wird eine besonders hohe Festigkeit der Nietverbindung erreicht.

Nach einer weiteren Ausführungsform kann der Setzkopf einen axial nach außen in Richtung des freien Endes des Zugdorns vorstehenden Ringabsatz um die Setzkopföffnung herum aufweisen. Der Ringabsatz, nachstehend auch allgemeiner als Aufdickung bezeichnet, erstreckt sich in radialer Richtung von einer Mittelachse der Setzkopföffnung mit einem Radius, der vorzugsweise kleiner oder gleich dem Radius des Außenumfangs des Hohlnietschafts ist. Der Begriff "Radius" ist nicht zwangsläufig so zu verstehen, dass die Aufdickung und/oder der Hohlniet einen kreisförmigen Außenumfang aufweisen. Der Begriff "Radius" soll auch andere Außenkonturen (mit dann je nach Radialrichtung verschiedener radialer Ausdehnung) umfassen.

Ein wichtiger Vorteil der Aufdickung liegt darin, dass diese durch eine die Gegenkraft erzeugende Anlagefläche des Setzgeräts, bspw. ein Mundstück des Setzgeräts, beim Setzen des Blindniets in den Setzkopf einfließt. Dies begünstigt das Einfließen von Material des Hohlniets respektive des Setzkopfs in die Verriegelungsnut und/oder sonstige Strukturen des Verriegelungsbereichs des Nietdorns und führt durch Kaltumformung zu einer Verfestigung des Setzkopfs. Außerdem wird in diesem Bereich der Hohlniet-Werkstoff radial an den Nietdornschaft gedrückt, was eine Unterstützung des Bremsverhaltens des Nietdorns erzeugt (also entgegen der Setzkraft wirkt und ein Durchziehen des Nietdorns durch den Hohlniet mit verhindert). Dies trägt zur Dichtheit bei und stabilisiert die Führung des Nietdorns mit (radiale Abstützung). Auch dient dies zur optimalen Ausnutzung der Tragfähigkeit im Bereich des Setzkopfes durch größtmögliche Hohlraumfüllung und erzeugt einen zusätzlichen Kraftschluss zwischen Nietdorn und Hohlniet zur Übertragung von Zugkräften sowie Formschluss zur Übertragung von Scherkräften. Es wird verhindert, dass der Setzkopf im Extremfall (bei gegebener Einbausituation bspw. oval) zerdrückt werden könnte, was die Tragfähigkeit negativ beeinflussen würde. Die Kaltverfestigung des Hohlnietwerkstoffes trägt außerdem dazu bei, dass ein Überziehen oder Durchziehen des Nietdornes bzw. ein Versagen des innenliegen Verriegelungswulstes verhindert wird, der sich während des Setzvorgangs in der Verriegelungsnut ausbildet.

Gemäß einer weiteren Ausführungsform kann an dem dem Zugdorn zugewandten Ende des Verriegelungsbereichs (vorzuzugsweise unmittelbar benachbart zu einer Sollbruchstelle des Nietdorns) ein mechanischer Verriegelungsmechanismus vorgesehen sein, der nach dem Setzen des Blindniets den Nietdorn in dem Setzkopf verriegelt.

Ein solcher am offenen Ende der Setzkopföffnung ausgebildeter Verriegelungsmechanismus kann vorzugsweise zusätzlich, ggf. aber auch alternativ, zu der vorstehend bereits beschriebenen inneren Verriegelung realisiert werden.

Eine konkrete Ausführungsform kann vorsehen, dass am Außenumfangsrand des Verriegelungsbereichs in Richtung des Zugdorns Laschen ausgebildet sind, die mit einem freien Ende in Richtung des Zugdorns am Außenumfang des Verriegelungsbereichs anliegend vorgesehen und radial nach außen abklappbar ausgebildet sind. Vorzugsweise stehen die Laschen in radialer Richtung gegenüber dem Zugdorn vor. Das Abklappen kann bspw. durch ein Mundstück eines Setzgeräts für Blindniete erfolgen, das die der Zugkraft Z an dem Zugdorn entgegen gerichtete Gegenkraft auf den Setzkopf ausübt und während des Setzvorgangs durch Zug an dem Zugdorn in einen Spalt zwischen dem freien Ende der Laschen und dem Verriegelungsbereich eingreift und die Laschen radial nach außen umbiegt. Dafür kann vorzugsweise eine Ausnehmung in dem Setzkopf vorgesehen sein, in die die umgebogenen Laschen eingreifen. Hierdurch wird der Nietdornkopf nach dem Setzen an dem Schließkopf anliegend fixiert und sichert die Blindnietverbindung zusätzlich formschlüssig.

Gemäß einer anderen Ausführungsform kann der Verriegelungsbereich an seinem dem Zugdorn zugewandten Ende einen Hinterschnitt aufweisen und in dem Setzkopf ein den Hinterschnitt ringförmig umgebender Spalt ausgebildet sein, in den beim Setzen des Blindniets ein Verriegelungsring eingepresst wird. Der den Hinterschnitt umgehende Spalt ist Richtung des Nietdornkopfs sich radial verjüngend ausbildet. Wenn der Verriegelungsring beim Setzen des Blindniets, bspw. durch ein Mundstück des Setzgeräts, in den den Hinterschnitt ringförmig umgebenden Spalt gepresst wird, verformt sich der Ring und sichert den Nietdorn in dem Setzkopf. Die Wirkung ist vergleichbar wie bei der vorbeschriebenen Ausführungsform.

Gemäß einem weiteren Aspekt der Erfindung kann am Nietdornkopf im Übergang von dem Nietdornkopf zu dem Nietdornkopfschaft ein Hinterschnitt an dem Nietdornkopfabsatz und/oder eine in den Nietdornkopf und/oder in den Nietdornkopfschaft eingreifende Nut ausgebildet sein. Hierdurch wird eine kraftschlüssige Verbindung zwischen dem Nietdornkopfabsatz und der offenen Stirnseite des Umformbereichs (mit einer eher geringen Haltekraft) zusätzlich formschlüssig verbunden. Dies stabilisiert die Verbindung zwischen dem beim Setzen des Blindniets entstehenden Schließkopf und dem Nietdornkopf, und damit die gesamte Nietverbindung, indem der Rand des Umformbereichs beim Setzen des Blindniets in den Hinterschnitt und/oder die Nut eingreift bzw. einfließt. Der Hinterschnitt am Nietdornkopf erzeugt zusätzliche Sicherheit gegen Einschlüpfen des Nietdorns in den Hohlniet. Mit Einschlüpfen ist gemeint, dass eine Relativbewegung zwischen Nietdornkopf und dem dem Setzkopf abgewandten Ende des Umformbereichs des Hohlniets vermieden wird, nachdem diese Kontakt zueinander haben. Dieses Ende des Umformbereichs des Hohlniets bildet die sich in einer Radialebene befindende äußere Stirnfläche des Hohlniets, die als Kontaktfläche zwischen dem Umformbereich des Hohlnietes und der unteren Fläche des Nietdornkopfabsatzes dient.

Es kann erfindungsgemäß vorgesehen sein, dass der Nietdorn eine sich axial zumindest durch den Nietdornkopf erstreckende (und vorzugsweise mit einer bzw. der Mittelachse des Nietdorns konzentrische) Kavität aufweist. Das Verhältnis des Innendurchmessers der Kavität zu dem Außendurchmesser des Schaftbereichs des Nietdorns kann bspw. 0,2 und 0,8 liegen, weiter vorzugsweise zwischen 0,4 und 0,7 und besonders bevorzugt zwischen 0,5 und 0,6 liegen. Die Kavität ist vorzugsweise auf der dem Zugdorn gegenüberliegenden Seite des Nietdornkopfs offen und bspw. als axiale Bohrung ausgeführt.

Wenn der Nietdorn als Vollbolzen ausgebildet ist oder sich eine Kavität ausschließlich bis in den Nietdornkopf erstreckt, ist der Schaftbereich des Hohlniets, der in eine Öffnung des Fügeguts oder Befestigungsguts (Befestigungsöffnung) aufgenommen ist, vollständig mit Material des Nietdornkopfs gefüllt. Der in diesem Bereich als Vollbolzen ausgebildete Nietdorn ist nicht oder nur wenig kompressierbar. Dies führt dazu, dass sich der Außendurchmesser des Hohlniets in der Öffnung des Fügeguts oder Befestigungsguts entsprechend weiten können muss, um die Öffnung kraftschlüssig auszufüllen und beispielsweise Fügegut kraftschlüssig zu verbinden, indem der gewünschte Lochleibungsdruck in der Öffnung des Fügeguts erzeugt wird. Dafür muss die Öffnung in dem Fügegut oder Befestigungsgut ausreichend klein sein. Andererseits muss die Öffnung in dem Fügegut oder Befestigungsgut so groß sein, dass der Nietdornkopfschaft mit der aufgewandten Setzkraft beim Einziehen in den Schaftbereich nicht zu viel Lochleibungsdruck erzeugt und steckenbleibt oder zu Beschädigungen an den Fügegut oder Befestigungsgut führt.

Die geeigneten Bereiche für den Öffnungsdurchmesser in dem Fügegut oder Befestigungsgut sind vergleichsweise klein und können bspw. durch den Fachmann materialabhängig in Messungen oder Versuchen ermittelt werden. Eine Materialabhängigkeit besteht sowohl im Hinblick auf das Fügegut oder Befestigungsgut als auch im Hinblick auf das Material und die Eigenschaften von Hohlniet und Nietdorn, bspw. durch Beschichtungen, Oberflächen mit erhöhter Härte oder Gleitbeschichtungen sowie in der Montage eingesetzte zusätzliche Dicht- bzw. Klebemittel. Material und Eigenschaften von Hohlniet und Nietdorn können gleich oder verschieden sein.

Vollbolzen im Bereich des Schaftabschnitts führen zu einer hohen Stabilität und Festigkeit, wenn bei einem Fügegut, d.h. mindestens zwei verschiedenen Körpern gleichen oder verschiedenen Materials, Scherkräfte quer zur Fügerichtung auftreten. In diesem Fall sind im Nietdornkopfschaft als Vollbozen ausgebildete Nietdorne vorteilhaft. Kavitäten im Bereich des Nietdornkopfs beeinträchtigen die Scherstabilität nicht und führen zu einer gewissen Gewichtsersparnis. Dies kann je nach Anwendungsfall vorteilhaft sein, bspw. beim Flugzeugbau.

In einer anderen Ausführungsform kann sich die Kavität teilweise oder vollständig durch den Nietdornkopfschaft erststrecken. Eine sich vollständig durch den Nietdornkopfschaft erstreckende Kavität kann sich in dem Nietdornkopfschaft in Axialrichtung ausgehend von dem Nietdornkopf bis an den Verriegelungsbereich erstrecken, bspw. axial bis an die Einschlupfschräge oder in die Einschlupfschräge hinein. Hierdurch wird eine hohe Plastizität bzw. Kompressierbarkeit des Nietdornkopfschafts und eine maximale Gewichtsersparnis erreicht. Bei mindestens zwei Fügematerialien kann das Ausbilden der Kavität in dem Nietdornkopfschaft allerdings zur Verringerung der Aufnahme von Scherkräften führen, wenn sich die Fügematerialien senkrecht oder schräg zur Axialrichtung verschieben oder verschieben können. Wenn derartige Scherkräfte entstehen und durch die Nietverbindung aufgenommen werden sollen, ist es im Bereich des Auftretens der Scherkräfte vorteilhaft, wenn der Nietdornkopfschaft als Vollbolzen ausgeführt ist (was die höchste Kraftaufnahmen von Scherkräften ermöglicht) oder sich eine Kavität ausgehend von dem Schießkopf in Axialrichtung maximal bis in das erste Fügegut erstreckt, also maximal bis zur dem Schießkopf abgewandten Oberfläche des ersten Fügeguts, und vorzugsweise nur bis etwa in die Mitte des ersten Fügeguts.

Gemäß einer weiteren Ausführungsform der Erfindung kann im Außenumfangsbereich des Nietdornkopfschafts eine Oberflächenstruktur eingearbeitet bzw. vorhanden, beispielsweise eingeprägt oder eingebracht sein. Diese Oberflächenstruktur wird bei dem Einführen des Nietdornkopfschafts des Nietdorns in den Schaftbereich des Hohlniets in den Innenumfang des Hohlniets eingedrückt. Dies führt zu einer höheren Nietkraft aufgrund einer festeren Verbindung der Oberflächen von Nietdorn und Hohlniet durch eine Erhöhung des Kraftschlusses und eine zumindest geringfügige Erzeugung von Formschluss. In einer Ausführungsform kann die Oberflächenstruktur durch rillenförmige Zacken, insbesondere in Umfangsrichtung an dem Außenumfang des Nietdornkopfschafts, erreicht werden. Die Zacken können gemäß einer besonders bevorzugten Ausführungsform Widerhaken aufweisen, die bei einer Bewegung des Nietdorns entgegen der Zugkraft beim Setzen des Blindniets wirken und entsprechend asymmetrisch ausgebildet sein.

Ferner kann optional auf dem Nietdornkopfschaft des Nietdorns zumindest abschnittsweise Klebstoff vorgesehen sein, beispielsweise in einen Spalt zwischen dem Nietdornkopfabsatz und der offenen Stirnseite des Hohlnietschafts vor dem Setzen des Blindniets. Der Klebstoff kann gemäß einer Ausführungsform auch in bspw. eingeprägten Oberflächenstrukturen des Nietdornkopfschafts vorgesehen sein, um bei einem gesetzten Blindniet den Nietdornkopfschaft des Nietdorns und den Schaftbereich des Hohlniets durch einen zusätzlichen Stoffschluss zu verkleben. Dazu kann bspw. ein geeigneter Klebespalt in Radialrichtung oder in Axialrichtung oder schräg dazu (bspw. als Gewindespalt, rautenförmiger Spalt oder dgl.) ausgebildet sein. Geeigneter Klebstoff, wie er bspw. in Luftfahrttechnik eingesetzt wird, kann vor dem Setzen des Blindniets in die Oberflächenstrukturen eingebracht werden. Es ist auch möglich, den Klebstoff am Hohlniet und/oder am Nietdorn auf deren Oberflächen und/oder in Oberflächenstrukturen als eine Beschichtung mit mikroverkapseltem Klebstoff aufzubringen. Dies kann bereits bei der Herstellung des Blindniets, d.h. von Hohlniet und Nietdornschaft, erfolgen. Aufgrund der kraftschlüssigen Verbindung von Hohlniet und Nietdornschaft bricht der mikroverkapselte Klebstoff beim Setzen des Blindniets auf (sowohl auf der Oberfläche als auch in Oberflächenstrukturen) und führt zu einem zusätzlichen Stoffschluss der Nietverbindung.

Alternativ oder zusätzlich zu dem Klebstoff kann (bspw. in den Oberflächenstrukturen, insbesondere in den Oberflächenstrukturen des Nietdornkopfschafts) ein Gleitmittel aufgebracht werden, welches den Setzvorgang vereinfacht und ein Verklemmen von Hohlniet und Nietdorn beim Setzen, d.h. während des Setzvorgangs bei sich erfindungsgemäß bewegendem Nietdorn im Hohlniet, verhindert, wodurch ggf. die Haltekraft (Vorspannkraft) der gesetzten Nietverbindung beeinträchtigt werden könnte. Da auch der Klebstoff eine reibkraftminimierende Wirkung entfaltet, kann ggf. bei dem Einsatz von Klebstoff auf ein zusätzliches Gleitmittel verzichtet werden.

Wenn an dem Hohlniet erfindungsgemäß auf den Einsatz von Gleitmittel und/oder Klebstoff verzichtet werden kann (und Gleitmittel und/oder Klebstoff ggf. ausschließlich auf dem Nietdorn aufbracht wird), bietet dies Vorteile bei einem Lackieren der Hohlniete vor oder nach dem Setzen und sonstigen Nacharbeiten, wie beispielsweise Spachteln.

Gemäß einem weiteren Aspekt der Erfindung kann der Hohlnietschaft in einer Ausführungsform insbesondere im Umformbereich verschiedene Bereiche unterschiedlicher Steifigkeit aufweisen. Hierdurch kann erfindungsgemäß die Ausbildung des Schließkopfs gezielt beeinflusst werden. Erfindungsgemäß bevorzugte Möglichkeiten zur Ausbindung von Bereichen unterschiedlicher Steifigkeit können bspw. lokal reduzierte Wandstärken oder verfestigte Bereiche durch mechanische Versteifungen oder bereichsweises Härten (bspw. durch Auslagerung von Legierungselementen und/oder Legierungsverbindungen, auch unter zuvor eingebrachter lokaler Wärme) sein. Mechanische Versteifungen oder reduzierte Wandstärken können durch bereichsweises Prägen, Pressen und/oder Rändeln (Walzen) erzeugt werden. Gemäß einer bevorzugten Ausführungsform können in dem Umformbereich eine oder mehrere (besonders bevorzugt zwei) Rampen ausgebildet werden, die (im Falle mehrerer Rampen) vorzugsweise in Axialrichtung gegenläufig ausgebildet sind. Eine Rampe kann dadurch gebildet sein, dass ein in Axialrichtung unterschiedlich tiefes Einprägen in den Außenumfang des Umformbereichs des Hohlniets erfolgt. Bei gegenläufigen Rampen liegen die Bereiche tiefster Einprägung vorzugsweise einander gegenüberliegend an den axial am weitesten voneinander entfernten Enden. Die Bereiche der tiefsten Einprägung stellen die bevorzugten Knickpunkte bei der Ausbildung des Schließkopfs aus dem Umformbereich dar. Die Rampen können in Umfangsrichtung des Hohlniets durch axiale Längsstreben in mehrere Rampenbereiche untereilt sein. In dem Schaftbereich des Hohlniets können am Außenumfang zur Stabilisierung und/oder verbesserten Kontaktierung axiale Längsrillen eingeprägt sein.

Ferner kann gemäß einer Ausführungsform der Erfindung vorgesehen sein, dass der Hohlnietschaft (insbesondere nur oder zumindest im Schaftbereich) am Außenumfang und/oder am Innenumfang in Axialrichtung verlaufende Einkerbungen und/oder einen variablen Querschnitt aufweist, bspw. eine von einer runden Querschnittsfläche abweichende, etwa polygonale Form. Dies ermöglicht das Setzen von Blindnieten mit größeren Toleranzen in den Öffnungen (Bohrungen) der Fügeelemente bzw. Befestigungselemente, weil durch die Varianz im Innen- und/oder Außenumfang Material beim Setzen des Blindniets ggf. Material des Blindniets im Umfangsrichtung ausweichen kann, wenn der Öffnungsdurchmesser so klein wäre, dass der Nietdorn andernfalls in dem Hohlnietschaft festklemmt, bevor der Blindniet vollständig gesetzt ist. Außerdem kann sich dadurch eine Verdrehsicherung realisieren lassen.

Ferner kann gemäß einer Ausführungsform der Erfindung vorgesehen sein, dass der Nietdornkopfschaft am Außenumfang in Axialrichtung verlaufende Einkerbungen und/oder einen variablen Querschnitt aufweist (bspw. eine von einer runden Querschnittsfläche abweichende, etwa polygonale Form). Hierdurch wird eine ähnliche Wirkung erzielt wie bei der vorbeschriebenen Struktur von Außenumfang und/oder Innenumfang des Hohlnietschafts. Beide Merkmale können erfindungsgemäß auch kombiniert werden.

Ein besonderer Effekt des erfindungsgemäß beschriebenen Blindniets liegt darin, dass der Blindniet innerhalb des Fügeguts oder Befestigungsguts radial geweitet wird und dabei besonders gute Lochleibungs- und Kontaktqualitäten mittels einer kraftschlüssigen Verbindung und gleichzeitig ein großflächig auf dem Fügegut oder Befestigungsgut aufliegender Schließkopf erreicht werden, die eine zuverlässige form- und kraftschlüssige Verbindung herstellen. Im Gegensatz zu Schraub- oder Bolzenverbindungen, die eine beidseitige Zugänglichkeit an der Montagestelle benötigen, wird mit der Erfindung eine hochstabile Blindnietverbindung mit hervorragenden Lochleibungseigenschaften und hoher Stabilität der Nietverbindung erreicht, und zwar aufgrund der Kombination einer effektiven kraftschlüssigen und einer effektiven formschlüssigen Verbindung, die nur eine einseitige Zugänglichkeit an der Montagestelle benötigt. Bevorzugterweise müssen beim Setzen des Blindniets in dem Setzwerkzeug keine zusätzlichen Verarbeitungsparameter, wie Setzkraft und/oder Setzweg oder ein Drehmoment bei einer Schraubverbindung, eingestellt werden. Daher wird eine einfache und sichere Montage erreicht. Verarbeitungsparameter, wie eine Setzkraft und ein Setzweg, müssen deswegen nicht eingestellt werden, weil der Setzweg durch die Verriegelung des Verriegelungsbereichs in der Setzkopföffnung und die (maximale) Setzkraft durch das Ausbilden der Sollbruchbruchstelle in dem Verriegelungsbereich immanent in dem Blindniet vorgegeben bzw. definiert sind. Hierdurch wird einer fehlerhaften Montage erfindungsgemäß effektiv entgegengewirkt.

Weitere Vorteile, Merkmale und Anwendungsmöglichkeiten der Erfindung ergeben sich auch aus der nachfolgenden Beschreibung von Ausführungsbeispielen und der Zeichnung. Dabei gehören alle beschriebenen und/oder bildlich dargestellten Merkmale zusammen oder beliebiger fachmännisch sinnvoller Kombination zum Gegenstand der Erfindung, auch unabhängig von ihrer Zusammenfassung in beschriebenen bzw. dargestellten Ausführungsbeispielen oder in den Ansprüchen.

Es zeigen:
- Fig. 1: eine Ausführungsform eines erfindungsgemäßen ungesetzten Blindniets im Querschnitt;
- Fig. 2: einen Abschnitt des Nietdorn gemäß Fig. 1 in einer Seitenansicht;
- Fig. 3: schematisch einen Kraftfluss in einem gesetzten Blindniet gemäß Fig. 1 ;
- Fig. 4: einen Verriegelungsbereich des Nietdorns und einen Verriegelungsabsatz des Hohlniets gemäß einer weiteren Ausführungsform;
- Fig. 5: einen Verriegelungsbereich des Nietdorns und einen Verriegelungsabsatz des Hohlniets gemäß einer weiteren Ausführungsform;
- Fig. 6a,b,c: im Querschnitt einen ungesetzten Blindniet gemäß Fig. 1 in einem Fügegut (a), einen gesetzten Blindniet gemäß Fig. 1 mit maximalem Klemmbereich (b) und einen gesetzten Blindniet gemäß Fig. 1 mit einem minimalen Klemmbereich (c);
- Fig. 7a,b,c: im Querschnitt einen ungesetzten Blindniet gemäß Fig. 1 mit einem Nietdorn mit tiefer Kavität im Schaftbereich (a), mit einem Nietdorn mit flacher Kavität im Schaftbereich (b) und mit einem Nietdorn mit keiner Kavität im Schaftbereich (c) gemäß weiterer Ausführungsformen;
- Fig. 8a,b: einen ungesetzten Nietdorn mit Oberflächenstrukturen gemäß einer weiteren Ausführungsform in einer Seitenansicht in einem geschnitten dargestellten Hohlniet (a) und den gesetzten Nietdorn gemäß Fig. 8a im Querschnitt;
- Fig. 9a,b,c: einen Nietdornkopfschaft im Querschnitt aus Richtung des Zugdorns und in der Seitenansicht in verschiedenen Ausführungsformen jeweils mit einem variablen polygonalen Querschnitt (a), einem runden Querschnitt mit axialen Längsrillen (b) und einem variablen polygonalen Querschnitt mit axialen Längsrillen;
- Fig 10a,b,c,d: einen Hohlniet im Querschnitt durch den Schaftbereich aus Richtung des Umformbereichs und einer hälftig geschnittenen Seitenansicht in verschiedenen Ausführungsformen jeweils mit Einkerbungen am Innenumfang des Schaftbereichs (a), mit Einkerbungen am Außenumfang des Schaftbereichs (b), mit Einkerbungen am Innenumfang und Innenumfang des Schaftbereichs (c) und mit einem variablen polygonalen Querschnitt im Innenumfang (d); und
- Fig. 11a,b,c,d,e: einen ungesetzten Blindniet mit Hohlniet in der Seitenansicht mit Hohlnieten in verschiedenen Ausführungsformen, in (a) gemäß Fig. 1, in (b) mit einer ersten Rampe an dem dem Nietdornkopf zugewandten Ende des Umformbereichs, in (c) mit einer zweiten Rampe an dem dem Schaftbereich zugewandten Ende des Umformbereich, in (d) mit einer ersten und einer zweiten Rampe im Umformbereich und in (e) mit einer ersten und einer zweiten Rampe im Umformbereich und einem gerändelten Bereich im Schaftbereich.

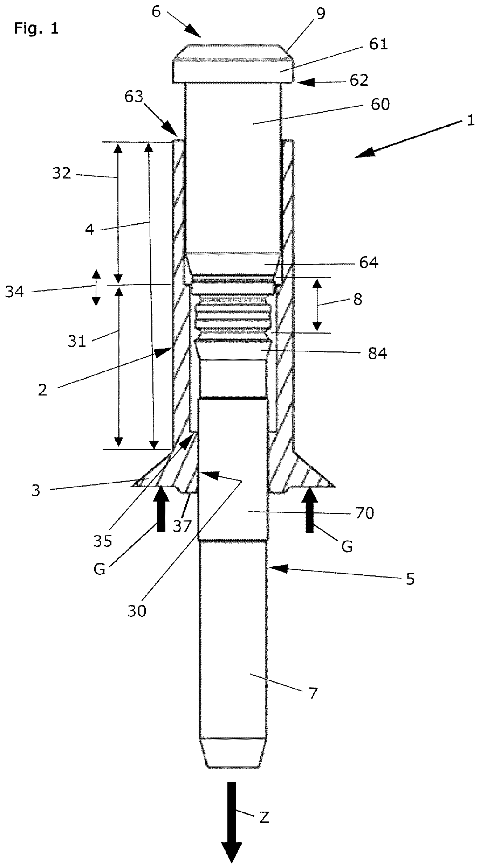

In Fig. 1 ist ein erfindungsgemäßer Blindniet 1 gemäß einer bevorzugten Ausführungsform dargestellt. Der Blindniet 1 weist einen Hohlniet 2 und einen in dem Hohlniet 2 geführten Nietdorn 5 auf, wobei der Hohlniet 2 in einem Längsschnitt und der Nietdorn 5 in einer Seitensicht dargestellt sind. Der Hohlniet 2 hat einen Setzkopf 3 mit einer axialen Setzkopföffnung 30 und einen sich an den Setzkopf 3 in axialer Richtung anschließenden Hohlnietschaft 4. Der Nietdorn 5 weist einen Nietdornkopf 6, einen sich von dem Nietdornkopf 6 in axialer Richtung erstreckenden Nietdornkopfschaft 60, einen sich in axialer Richtung erstreckenden Zugdorn 7 (der in diesem Text auch synonym als Nietdornschaft bezeichnet wird) und einen zwischen dem Nietdornkopfschaft 60 und dem Zugdorn 7 ausgebildeten Verriegelungsbereich 8 auf. An dem Nietdornkopf 6 ist eine Einführfase 9 ausgebildet, um das Einstecken des Blindniets 1 in eine Öffnung 103 des Fügeguts oder Befestigungsguts 100 zu erleichtern.

Der Zugdorn 7 ist in axialer Richtung bewegbar in der Setzkopföffnung 30 geführt, und der Setzkopf 3 und der Nietdornkopf 60 sind in axialer Richtung auf verschiedenen Seiten des Hohlnietschafts 4 angeordnet, wobei ein Kopfschaftdurchmesser D1 des Nietdornkopfschafts 60 größer ist als ein Innendurchmesser im an den Setzkopf 3 anschließenden Schaftbereich 31 des Hohlniets 2 und derart bemessen ist, dass der Nietdornkopfschaft 60 bei Ausüben einer axialen Zugkraft Z auf den Zugdorn 7 unter Kaltverformung von Schaftbereich 31 und/oder Nietdornkopfschaft 60 aufgrund eines radialen Drucks in den Schaftbereich 31 des Hohlniets 2 einziehbar ist, bis der Verriegelungsbereich 8 des Nietdorns 5 an oder in dem Setzkopf 3 des Hohlniets 2 positioniert und fixiert ist.

Der Hohlniet 2 weist anschließend an den Schaftbereich 31 auf der dem Setzkopf 3 abgewandten Seite einen Umformformbereich 32 zum Ausbilden eines Schließkopfs 33 auf, wobei ein Innendurchmesser des Umformbereichs 32 größer ist als ein Innendurchmesser des Schaftbereichs 31. Der Innendurchmesser des Umformbereichs 32 kann vorzugsweise dem Kopfschaftdurchmesser D1 entsprechen, so dass der der Nietdornkopfschaft 60 in dem Umformbereich 32 reibungsfrei oder reibungsarm, aber geführt, verschiebbar ist. Der Nietdornkopf 6 weist an dem dem Verriegelungsbereich 8 abgewandten Ende des Nietdornkopfschafts 60 einen Nietdornkopfflansch 61 auf, der mit einem Nietdornkopfabsatz 62 radial nach außen von dem Nietdornkopfschaft 60 vorsteht und bei einer axialen Bewegung des Nietdorns 5 in Richtung der Zugkraft Z an einer offenen Stirnseite 63 des Umformbereichs 32 des Hohlnietschafts 4 angreift, um bei einem weiteren Ausüben der Zugkraft Z auf den Zugdorn 7 (Nietdornschaft) den Schließkopf 33 durch Umformen des Umformbereichs 32 auszubilden. Das Ausbilden des Schließkopfs 33 erfolgt typischerweise durch Falten des Umformbereichs nach außen (also in einer senkrecht auf der Axialrichtung in Richtung der Mittelachse des Nietdorns 5 stehenden Radialrichtung).

Der Übergang von einem größeren Innendurchmesser des Hohlnietschafts 4 im Umformbereich 32 auf einen kleineren Innendurchmesser des Hohlnietschafts 4 im Schaftbereich 31 erfolgt in einem Übergangsbereich 34 durch einen stufenförmigen Übergang, wie hier dargestellt, oder durch einen abgeschrägten oder kurvigen Übergang. Der Übergang von dem größeren Innendurchmesser in dem Schaftbereich 31 auf den kleineren Innendurchmesser in der Setzkopföffnung 30 erfolgt durch einen kantenartigen Verriegelungsabsatz 35, der bei dem Setzen des Blindniets 1 mit dem Verriegelungsbereich 8 zusammenwirkt. Entsprechend kann an dem dem Verriegelungsbereich 8 zugewandten Ende des Nietdornkopfschafts 60 vorzugweise eine Einschlupfschräge 64 vorgesehen sein, an der der größere Kopfschaftdurchmesser D1 auf einen kleineren Verriegelungskopfdurchmesser D2 übergeht. Der Verriegelungskopfdurchmesser D2 kann dem Innendurchmesser in dem Schaftbereich 31 des Hohlnietschafts 4 entsprechen, so dass der Verriegelungskopf 80 des Verriegelungsbereichs 8 in dem Schaftbereich 31 reibungsfrei oder reibungsarm, aber geführt, verschiebbar ist.

Der Verrieglungskopfdurchmesser D2 des Verriegelungskopfs 80 ist in einer bevorzugten Ausführungsform entsprechend kleiner als der (oder im Wesentlichen gleich dem) Innendurchmesser im Schaftbereich 31 des Hohlniets 2 und größer ist als ein Innendurchmesser der Setzkopföffnung 30, die in dem Setzkopf 30 an den Verriegelungsabsatz 35 anschließend ausgebildet ist (auf der dem Nietdornkopf abgewandten Seite). Der Setzweg des Blindniets 1 wird dadurch begrenzt, dass der Verriegelungskopf 80 beim Setzen des Blindniets durch Zug in Richtung der Zugkraft Z, bspw. durch ein Setzgerät, an dem Verriegelungsabsatz 35 anstößt und dort eine Verriegelungsmechanik (insbesondere durch Verformung) aktiviert, bis eine Verriegelung bewirkt ist und eine Bewegung des Nietdorns 5 in Richtung der Zugkraft 7 stoppt.

In Fig. 1 ist eine bevorzugte Relativposition von Hohlniet 2 und Nietdorn 5 vor dem Setzen des Blindniets 1 dargestellt, etwa in einem Ausgangszustand (oder auch als Auslieferungszustand bezeichnet) des Blindniets 1, in dem der Verriegelungskopf 80 des Nietdorns 5 gerade im Übergangsbereich 34 des Hohlniets 2 angeordnet ist, vorzugsweise derart, dass der Verriegelungskopf 80 in dem Schaftbereich 31 und der Nietdornkopfschaft 60 (ggf. vollständig oder teilweise einschließlich einer ggf. vorgesehenen Einschlupfschräge 64) in dem Umformbereich 32 positioniert sind. In diesem Ausgangszustand wirken (noch) keine den Hohlnietschaft 4 radial weitenden Radialkräfte auf den Blindniet 1, so dass dieser einfach in eine Öffnung des Fügeguts oder Befestigungsguts (nachfolgend auch als Befestigungsöffnung bezeichnet) eingesteckt werden kann. In diesem Ausgangszustand kann der Nietdorn 5 in dem Hohlniet 2 in Position gehalten sein, so dass sich Nietdorn 5 und Hohlniet 2 während des Transports des Blindniets 1 und beim Führen des Blindniets 1 in die Befestigungsöffnung relativ zueinander bei den üblicherweise einwirkenden Kräften, die deutlich kleiner sind als die Zugkraft Z, nicht verschieben. In der hier dargestellten Ausführungsform wird dies durch einen Zugdornrändel 70 erreicht, dessen Zugdornrändeldurchmesser D5 (bezogen auf seine größte Außenumfangsfläche) größer ist als ein Zugdorndurchmesser D4 des Zugdorns 7. Der Zugdorndurchmesser D4 entspricht gerade dem Innendurchmesser der Setzkopföffnung 30, so dass der Zugdorn 7 der Setzkopföffnung 30 reibungsarm oder reibungsfrei, aber geführt, axial bewegbar ist. Der Zugdornrändeldurchmesser D5 ist minimal größer als Innendurchmesser der Setzkopföffnung 30, so dass der Zugdorn 7 mit dem Zugdornrändel in der Setzkopföffnung kraftschlüssig verklemmt, wobei die Verklemmung durch Aufbringen der Zugkraft Z im Wesentlichen verformungsfrei oder verformungsarm gelöst wird.

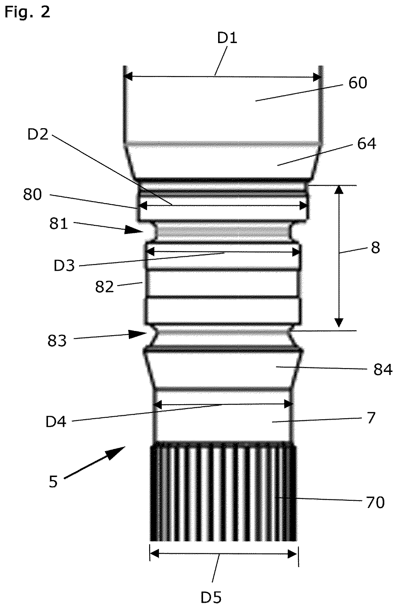

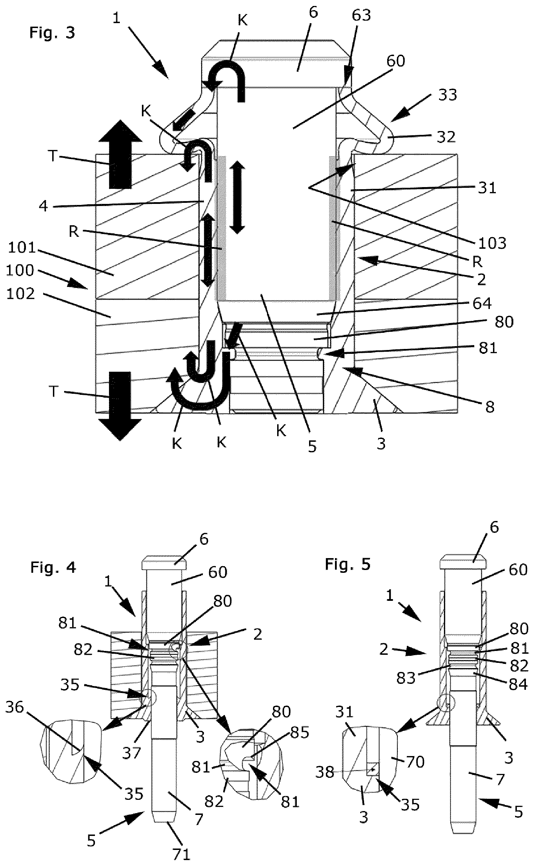

Fig. 2 zeigt den Verriegelungsbereich 8 des Nietdorns 5 im Detail. Die axiale Länge des Verriegelungsbereichs 8 des Nietdorns 5 entspricht im Wesentlichen einer axialen Länge der Setzkopföffnung 30 in dem Setzkopf 3, insbesondere die axiale Länge des Verriegelungsbereichs 8 zwischen dem Verriegelungskopf 80 und einer Sollbruchstelle 83 (wobei die Sollbruchstelle 83 und der Verriegelungskopf 80 vorzugsweise bei der axialen Länge des Verriegelungsbereichs 8 nicht mitgerechnet werden). Hierdurch wird erreicht, dass bei dem gesetzten Blindniet 1 die Setzkopföffnung 30 nahezu vollständig durch den Verriegelungsbereich 8 verschlossen ist, wenn der Zugdorn 7 des Nietdorns 5 nach dem Setzen an der Sollbruchstelle 83 abgebrochen ist. Vorzugsweise ist die axiale Länge des Verriegelungsbereichs 8 so bemessen, dass nach dem Setzen des Blindniets 1 und Abbrechen des Zugdorns 7 von dem Nietdorn 5 kein Abschnitt des Nietdorns 5 über die freiliegende Setzkopfoberfläche vorsteht, wie in Fig. 3 gezeigt.

Der Aufbau des Verriegelungsbereichs 8 wird nachstehend in Axialrichtung ausgehend von dem Verriegelungskopf 80 in Richtung auf den Zugdorn 7 wie folgt erläutert. An den Verriegelungskopf 80 schließt sich (in der hier dargestellten, besonders bevorzugten Ausführungsform unmittelbar) eine Verriegelungsnut 81 an, die gegenüber dem Außenumfang des Verriegelungskopfes 80 und dem Außenumfang des sich in Axialrichtung weiter an die Verriegelungsnut 81 anschließenden Verriegelungsschafts 82 zurückgesetzt ist. Mit anderen Worten ist der Durchmesser der Verriegelungsnut 81 in deren Nutgrund kleiner als der Verriegelungskopfdurchmesser D2 und ein Verriegelungsschaftdurchmesser D3. Der Verriegelungsschaftdurchmesser D3 selbst ist kleiner als der Verriegelungskopfdurchmesser D2 und kann etwa dem Innendurchmesser des Setzkopfs 30 entsprechen, besonderes bevorzugt etwas größer sein als Innendurchmesser des Setzkopfs 30, damit der Verriegelungsschaft 82 selbst eine kraftschlüssige Verbindung in dem Setzkopf 3 ausbildet.

An dem dem Zugdorn 7 zugewandten Ende des Verriegelungsschafts 82 respektive des Verriegelungsbereichs 8 ist eine weitere, radial nach innen gerichtete Nut ausgebildet. Dies Nut dient als Sollbruchstelle 83, wenn der Verriegelungskopf 80 an dem Verriegelungsabsatz 35 anliegt, die Verriegelungsmechanik erfolgt ist und der Nietdorn auch bei einer Erhöhung der Zugkraft Z nicht mehr axial in Richtung der Zugkraft Z weiterbewegt werden kann. Dann bricht der Zugdorn 7, auf den die Zugkraft Z ausgeübt wird, abgestützt gegen eine an dem Setzkopf 3 angreifende Gegenkraft G, die die Zugkraft aufnimmt, an der Sollbruchstelle 83 ab.

Auf der dem Verriegelungsschaft 82 gegenüberliegenden und dem Zugdorn 7 zugewandten Seite der Sollbruchstelle 83 ist eine Zugdornschräge 84 vorgesehen, die den Außendurchmesser im Verriegelungsbereich 8 des Nietdorns auf den Zugdorndurchmesser D4 reduziert. An dem der Sollbruchstelle 83 zugewandten Ende der Zugdornschräge 84, an dem der Außendurchmesser der Zugdornschräge 84 vorzugsweise am größten ist, liegt der Außendurchmesser der Zugdornschräge 84 erfindungsgemäß bevorzugt etwa zwischen dem Verriegelungsschaftdurchmesser D3 und dem Verriegelungskopfdurchmesser D2, besonders bevorzugt etwa im Bereich des Verriegelungsschaftdurchmesser D3 oder etwas größer. Hierdurch wird beim Eintritt der Zugdornschräge 84 ein hoher radialer Druck auf das Material des Setzkopfs 3 am Innenumfang der Setzkopföffnung 30 im Bereich des Verriegelungsabsatzes 35 ausgeübt, so dass ein Fließen von Material des Setzkopfs 3 durch insbesondere Kaltumformung in die Verriegelungsnut 81 begünstigt wird, genauso wie durch den Druck des Verriegelungskopfes 80 auf den Verriegelungsabsatz 35.

Das in die Verriegelungsnut 81 einfließende Material des Setzkopfs 3 ist aufgrund der Kaltumformung besonders fest und erzeugt damit einer sehr stabile innere Verriegelung des Nietdorns 5 in dem Hohlniet 2 nach dem Setzen des Blindniets 1, die auch formschlüssig wirkt und damit die Blindnietverbindung besonders sichert. Dies ist für Sicherheitsanwendungen gerade bei mechanisch stark beanspruchten Verbindungen, etwa im Luftfahrtbereich (Flugzeugbau), besonders vorteilhaft.

Diese Wirkung wird anhand der Fig. 3 näher erläutert, die einen gesetzten Blindniet 1 in einer Befestigungsöffnung 103 eines Fügeguts 100 aus einem ersten Fügematerial 101 und einem zweiten Fügematerial 102 zeigt.

Der Hohlniet 2 ist in der Befestigungsöffnung 103 derart angeordnet, dass der Setzkopf 3 an dem zweiten Fügematerial 102 anliegt und dieses formschlüssig hält. An dem dem Setzkopf 3 gegenüberliegenden Ende des Hohlniets 2 ist der Schließkopf 33 ausgebildet, der durch Umformen aus dem Umformbereich 32 des Hohlnietschafts 4 entstanden ist. Der Nietdornkopf 6 hat an dem freien Ende 63 des Hohlnietschafts 4 angegriffen und die Zugkraft Z auf den Umformbereich 32 übertragen. Der Schließkopf 33 liegt an dem ersten Fügematerial 101 an und hält dieses formschlüssig. Das erste Fügematerial 101 und das zweite Fügematerial 102 sind durch den Setzkopf 3 und den Schließkopf 33 eingeklemmt. Durch die Klemmung werden in Fig. 3 durch dicke Pfeile darstellte Trennkräfte T von erstem und zweitem Fügematerial 101, 102 aufgenommen. Dazu müssen entsprechende Klemmkräfte K durch den Blindniet 1 auf die Oberflächen von erstem und zweitem Fügematerial 101, 102 einwirken. Der gesamte Kraftfluss der Klemmkräfte K kann durch den Hohlniet 2 und zusätzlich durch den Nietdorn 5 und den Nietdornkopf 6 erzeugt werden, der einen Teil der Klemmraft auf den Schließkopf 33 des Hohlniets 4 überträgt. Der Kraftfluss ist durch die dünnen Pfeile in dem Hohlniet 2 und dem Nietdorn 5 schematisch dargestellt.

Entlang des Hohlnietschafts 4 wirken, wie bei jeder Blindnietverbindung, Axialkräfte, die durch den Schließkopf 33 und den Setzkopf 3 als den Trennkräften T entgegen gerichtete Klemmkräfte K auf die Oberflächen der Fügematerialien 101, 102 einwirken. Durch die innere (innenliegende) Verriegelung des Nietdorns 5 im Verriegelungsbereich 8 können, wie in Fig. 3 bei einer bevorzugten Ausführungsform darstellt, anteilig auch durch den Nietdorn 5 Axialkräfte zwischen der mit Material des Setzkopfs 3 ausgefüllten Verriegelungsnut 81 und der offenen Stirnseite 63 des Hohlnietschafts 4 (über den Setzkopf 6) übertragen werden. Dieser zweite, parallele Kraftpfad trägt dann eine Teillast der Klemmkraft K und trägt somit zu einer besonders großen Festigkeit der Nietverbindung bei. Auch der unter einer Axialkraft (die einen vorzugsweise großen Anteil der Zugkraft Z aufweist) vor dem Bruch an der Sollbruchstelle 83 und dem Ende des Setzvorgangs belastete Nietdorn 5 kann durch den Form- und Kraftschluss durch die Verriegelungsmechanik in der Verriegelungsnut 81 sowie den Kraftschluss zwischen Nietdornkopfschaft 60 und Innendurchmesser des Schaftbereichs 31 und/oder einem weiteren Kraftschluss zwischen Verriegelungsschaft 82 und Setzkopföffnung 30 einen Teil dieser Axialkraft auch nach Abschluss des Setzvorgangs beibehalten und als axial vorgespannter Nietdorn in der Nietverbindung klemmkrafterhöhend wirken, auch bei zusätzlichen Belastungen (Kräften), die im späteren Betrieb an der Nietstelle wirken.

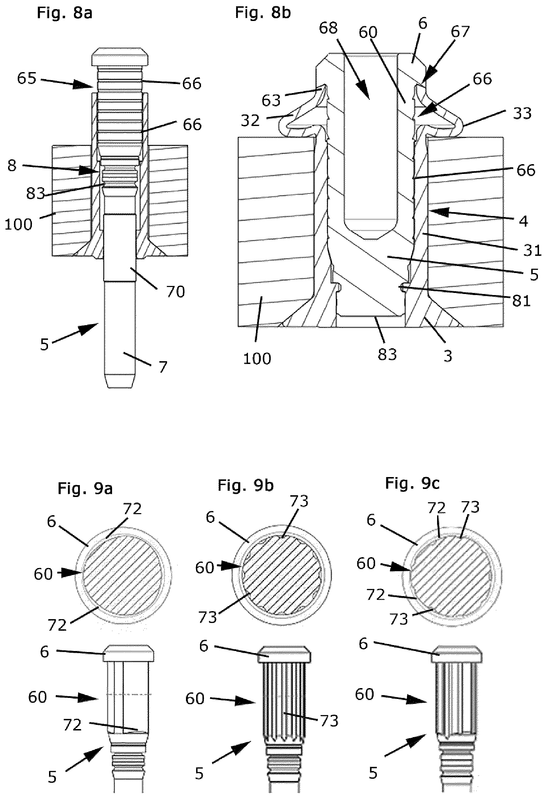

Durch das Einziehen des Nietdornkopfschafts 60 (mit größerem Außendurchmesser) in den Schaftbereich 31 (mit kleinerem Innendurchmesser) weitet sich der Hohlnietschaft 4 und füllt die Befestigungsöffnung 103 in dem Fügegut 100 kraftschlüssig. Ergänzend wird ein kraftschlüssiger Reibschluss R zwischen der Außenumfangsfläche des Nietdorns 5 im Bereich des Nietdornkopfschafts 60 und Innenumfangsfläche des Hohlnietschafts 4 im Schaftbereich 31 erzeugt. Dieser Reibschluss R unterstützt die Krafteinleitung der Klemmkraft K in den Nietdorn 5. Eine Verbesserung der Verbindung zwischen Nietdorn 5 und Hohlnietschaft 4 kann durch eine zusätzliche Oberflächenstruktur 65 auf dem Nietdorn 5, insbesondere auf dem Nietdornkopfschaft 60, erreicht werden. Ein Beispiel für eine solche (optionale) Oberflächenstruktur 65 ist in den Fig. 8a und 8b gezeigt. Dort sind voneinander in Axialrichtung beabstandet mehrere rillenförmige Zacken 66 in Umfangsrichtung an dem Außenumfang des Nietdornkopfschafts 60 eingeprägt, wobei die Zacken 66 in dem gezeigten Ausführungsbeispiel derart gerichtet sind, dass sie das Einziehen des Nietdornkopfschafts 60 in den Schaftbereich 31 des Hohlnietschafts 4 in Richtung der Zugkraft Z nicht behindern und auf der Innenwandoberfläche des Hohlnietschafts 4 gleiten. Bei einer Bewegung entgegen der Richtung der Zugkraft Z würden die Zacken 66 dagegen an der Innenwandoberfläche des Hohlnietschafts 4 schaben und ggf. in der Innenwandoberfläche eintauchen.

Ein erfindungsgemäß wichtiger Vorteil der in Fig. 3 dargestellten Ausführungsform der Erfindung liegt darin, dass die Position der inneren Verriegelung zwischen Nietdorn 5 und Hohlniet 2 nahe an dem Kraftüberleitungspunkt zwischen Setzkopf 3 und Fügegut 100 liegt. Dies führt zu einer direkten und sanften Kraftumleitung. Je direkter und sanfter die Kraftumleitung ist, desto besser sind die Krafteinleitungs- und Kraftübertragungseigenschaften. Der Nietdorn 5 kann im Bereich unterhalb des Nietdornkopfs 6 zusätzlich kraft- und/oder formschlüssig verriegelt werden oder eine solche Verriegelung unterstützen. Ergänzend ist es möglich, in die Oberflächenstruktur 65, hier beispielhaft als Zacken 66 dargestellt, Klebstoff (zur zusätzlichen Unterstützung der Verriegelung) und/oder Gleitmittel (zum sanfteren Einziehen des Nietdornkopfschafts 60 in den Schaftbereich 31), je nach Anwendungsfall, zu applizieren.

In der Schnittdarstellung des Nietdornkopfs 6 und Nietdornkopfschafts 60 gemäß Fig. 8b ist als ein weiteres, erfindungsgemäß optional vorgesehenes Merkmal zur Verbesserung der Verbindung von Nietdorn 5 und Hohlnietschaft 4 vorgeschlagen, dass an dem Nietdornkopfabsatz 62 des Nietdornkopfs 6 ein Hinterschnitt 67 ausgebildet ist, an dem die offene Stirnseite 63 des Hohlnietschafts 4 angreift. Hierdurch wird die offene Stirnseite 63 des Hohlnietschafts 4 besonders sicher an dem Nietdornkopf 6 gehalten, indem die Wandung des Hohlnietschafts 4 im Bereich der Stirnseite 63 vor dem Abbiegen des Umformbereichs 32 zum Ausbilden des Setzkopfs 33 eng an dem Nietdornkopfschaft 60 geführt wird und der Kraft-übertrag zuverlässig in Axialrichtung erfolgt. Durch die Hinterschnittgeometrie werden Radialkräfte in Richtung der axialen Mittelachse des Nietdorns 5 von außen umlaufend auf die offene Stirnseite des Hohlniets 1 einwirkend erzeugt, die eine Relativbewegung zwischen der offenen Stirnseite des Hohlnietes und dem Nietdornkopfabsatz 62 verhindern, d.h. der Nietdorn 5 respektive der Nietdornkopf 6 schlüpft nicht in den Hohlniet 2 ein. Dieses Merkmal kann zusammen mit und unabhängig von dem Ausbilden der auch in Fig. 8a und 8b dargestellten Oberflächenstruktur 65 realisiert werden.

Entsprechend der Darstellung in Fig. 4 kann der Verriegelungsabsatz 35 optional als angeschrägter oder angeschlitzter Absatz 36 abgebildet sein, um das Einlie-βen des Materials des Verriegelungsabsatzes 35 in die Verriegelungsnut 81 zu begünstigen. Dies ist der Detailvergrößerung des Verriegelungsabsatzes 35 in Fig. 4 zu entnehmen. Ferner kann (vorzugsweise zusammen, ggf. aber auch unabhängig von dem vorbeschriebenen Merkmal) der Verriegelungskopf 80 am Übergang in die Verriegelungsnut 81 als angeschrägter oder angeschlitzter Absatz 85 ausgeformt sein. Auch hierdurch wird das Einließen des Materials des Verriegelungsabsatzes 35 in die Verriegelungsnut 81 begünstigt. Der angeschrägte oder angeschlitzte Absatz 36 des Verriegelungsabsatzes 35 und der angeschrägte oder angeschlitzte Absatz 85 des Verriegelungskopfs 80 verzahnen dann besonders gut miteinander beim Setzen des Blindniets und verstärken die innenliegende Verriegelung von Nietdorn 5 und Hohlniet 2 im Setzkopf 3.

Ferner kann erfindungsgemäß optional vorgesehen sein, an einer dem Nietdornkopf 6 abgewandten (vorzugsweise radial gerichteten) Oberfläche des Setzkopfs 3, auf welche die Gegenkraft G beim Setzen des Blindniets 1 aufgebracht wird, ein axial in Richtung des freien Endes 71 des Zugdorns 7 vorstehenden Ringabsatz 37 um die Setzkopföffnung 30 herum vorgesehen ist. Dieser Ringabsatz 37, allgemeiner auch als Aufdickung bezeichnet, wird durch das Aufbringen der Gegenkraft G beim Setzen in Richtung des Verriegelungsbereichs 8 in den Setzkopf gedrückt und begünstigt so auch das Einließen von Material aus dem Verriegelungsabsatz 35 in die Verriegelungsnut 81. Auch diese Maßnahmen können die innenliegende Verriegelung im Bereich des Setzkopfs 3 stärken.

Ferner kann ein separates verformbares Verriegelungselement 38 im Schaftbereich 4 des Hohlniets 2 zwischen dem Verriegelungsabsatz 35 des Hohlniets 2 und dem Verriegelungskopf 80 des Nietdorns und/oder ganz oder teilweise in der Setzkopföffnung 30 angeordnet sein, das beim Setzen des Blindniets 1 in die Verriegelungsnut 81 des Nietdorns 5 eingreift und dort verpresst wird. Dies ist in Fig. 5 und insbesondere in deren Detailvergrößerung dargestellt. Auch diese Ausführung lässt sich mit allen oder einem Teil der vorbeschriebenen Ausführungen zur Stärkung der innenliegenden Verriegelung kombinieren oder unabhängig davon realisieren. Das separate verformbare Verriegelungselement 38 kann bspw. als Metallring ausgebildet sein.

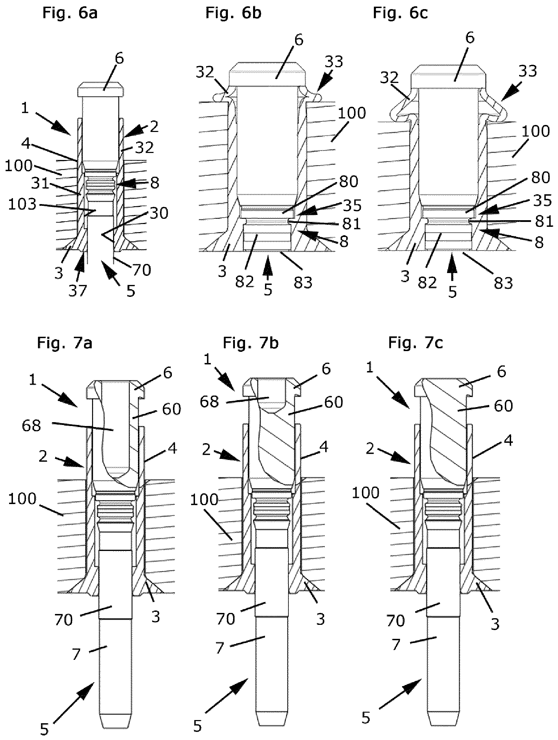

Fig. 6a zeigt den vorbeschriebenen Blindniet 1 in seinem Ausgangszustand, in dem der Nietdorn 5 mit dem Zugdornrändel 70 in der Setzkopföffnung 30 des Hohlniets 2 vorfixiert und der Blindniet 1 in die Befestigungsöffnung 103 eines Fügeguts 100 eingesteckt sind. Dies zeigt den Zustand vor dem Setzen des Blindniets 1, in dem der axial vorstehende Ringabsatz 37 auf dem Setzkopf 3 noch ausgebildet ist.

**In** den Fig. 6b und 6c ist der erfindungsgemäße Blindniet 1 nach dem Setzen dargestellt, in Fig. 6b mit relativ dickerem Fügegut 100 und in Fig. 6c mit relativ dünnerem Fügegut 100. Der Umformbereich 32 des Hohlniets 2 ist durch den Nietdornkopf 6 zusammengezogen unter Ausbildung des Schließkopfs 33, der an einer Oberfläche des Fügeguts 100 anliegt. Trotz der unterschiedlichen Dicke des Fügeguts 100 in den Fig. 6b und 6c ist der Durchmesser des ausgebildeten Schließkopfs 33 in etwa vergleichbar, was zu einer vergleichbaren Krafteinwirkung des Schließkopfs 33 auf das Fügegut 100 führt. Dies ist vorteilhaft, weil die Setzeigenschaften und die Verbindungseigenschaften des Blindniets 1 insoweit unabhängig von der Dicke des Fügeguts sind.

Dies liegt daran, dass der Setzweg beim Setzen des Blindniets 1 in beiden Fällen dadurch beschränkt ist, dass der Verriegelungsbereich 8 des Nietdorns 5 in die Setzkopföffnung 30 aufgenommen und der Verriegelungskopf 80 an dem Verriegelungsabsatz 35 anliegt und/oder sich ganz oder teilweise in der Setzkopföffnung 30 befindet. Material des Verriegelungsabsatzes 35 und/oder des Setzkopfs 3 ist durch Kaltumformen (Kaltfließen) in die Verriegelungsnut 81 eingeflossen. Hierdurch wird die erfindungsgemäße formschlüssige und anteilige ggf. auch kraftschlüssige, innenliegende Verriegelung erreicht, die bereits beschrieben wurde.

Der Nietdorn 5 ist nach dem Setzen an der Sollbruchstelle 83 abgebrochen, so dass der Bereich des Zugdorns 7 entfernt wurde. Außerdem ist der Ringabsatz 37 (vgl. Fig. 6a) durch des Setzen und das Ausüben der Gegenkraft G in den Setzkopf 3 eingedrückt worden. Hierdurch wird erreicht, dass der Verriegelungsschaft 82 und die außenliegende Oberfläche des Setzkopfs 3 im Wesentlichen bündig abschließen.

Der Nietdorn 5 kann im Bereich des Nietdornkopfs 6 und des sich an den Nietdornkopf 6 vorzugsweise unmittelbar anschließenden Nietdornkopfschafts 60 als Vollbolzen ausgebildet sein, wie in Fig. 7c gezeigt. In dieser Ausführungsform ist die Befestigungsöffnung 103 des Fügeguts 100 bei gesetztem Blindniet 1 vollständig ausgefüllt. Dies führt zu einer maximal stabilen Nietverbindung, die insbesondere auch Scherkräfte zwischen zwei miteinander zu verbindenden Fügematerialien 101, 102 (vgl. Fig. 3) effektiv aufnimmt.

In anderen Ausführungsformen, wie in Fig. 7a und 7b gezeigt, kann der Nietdorn 5 eine sich axial zumindest durch den Nietdornkopf 6 erstreckende, vorzugsweise mit der Mittelachse des Nietdorns 5 konzentrischen, Kavität 68 aufweisen. In der Ausführung gemäß Fig. 7b erstreckt sich die Kavität 68 im Wesentlichen nur im Bereich des Nietdornkopfs 6. Dies hat zur Folge, dass bei einem gesetzten Blindniet 1 die Befestigungsöffnung 103 immer noch im Wesentlichen vollständig ausgefüllt ist, mit entsprechend hoher Stabilität gegenüber auftretenden Scherkräften. Durch diese (kleine) Kavität 68 lässt sich eine kleine Gewichtsersparnis erreichen. Außerdem kann die Kavität bei der Fertigung zu einem stabileren Halten des Nietdorns in Werkzeugen dienen, bspw. zum Fügen von Nietdorn 5 und Hohlniet 2 in den in den Fig. 7a, 7b und 7c dargestellten Ausgangszugstand.

In der Ausführungsform gemäß Fig. 7a erstreckt sich die (große) Kavität 68 durch Nietdornkopf 6 und im Wesentlichen vollständig durch den Nietdornkopfschaft 60. Bei dieser Ausführungsform wird auch der Nietdornkopfschaft 60 verformt, im Wesentlichen zusammengedrückt, wenn der Nietdornkopfschaft 60 beim Setzen in den Schaftbereich 31 des Hohlniets 2 eingezogen wird. Dies erlaubt größere Toleranzen bei Durchmessern der Befestigungsöffnungen 103, weil insbesondere geringfügig kleinere Durchmesser dynamisch durch Verformung des Nietdornkopfschafts aufgenommen werden können, ohne Beschädigungen an dem Fügegut 100 hervorzurufen und/oder zu einem Verklemmen des Nietdorns 5 in dem Hohlniet 2 zu führen, bevor der Blindniet 1 vollständig gesetzt ist. Die Aufnahme von Scherkräften ist in dieser Ausführungsform allerdings kleiner. In der Praxis ist es sinnvoll, verschiedene Ausführungsformen des Blindniets 1 mit unterschiedlich großen Kavitäten 68 und ohne Kavität 68, je nach Verwendung, vorzuhalten.

Gemäß einer Ausführungsform kann der Nietdorn 5, insbesondere der Nietdornkopfschaft 60, einen variablen Querschnitt 72 (Fig. 9a) und in Axialrichtung verlaufende Oberflächenstrukturen, bspw. Einkerbungen 73, (Fig. 9b) am Außenumfang aufweisen. Der variable Querschnitt 72 kann eine polygonale Struktur bilden. In der Ausführungsform nach Fig. 9c sind der variable Querschnitt 72 und die Einkerbungen 73 überlagert. Oberhalb der Seitenansichten in den Fig. 9a, 9b und 9c sind jeweils zugehörige Schnittdarstellungen durch den Nietdornkopfschaft 60 dargestellt. Der variable Querschnitt 72, wie dargestellt bspw. in einer polygonalen Struktur, und/oder die Einkerbungen 73 erleichtern das Einziehen des Nietdornkopfschafts 60 in den Schaftbereich 31 und wirken einem Verklemmen entgegen. Sie ermöglichen auch das Einbringen von Gleitmittel und/oder Klebstoff zwischen Nietdorn 5 und Hohlniet 2. Außerdem ermöglichen sie einen Toleranzausgleich bei Befestigungsöffnungen 103 in dem Fügegut 100 durch eine erhöhte Variabilität beim Ausweichen des verdrängten Materials.

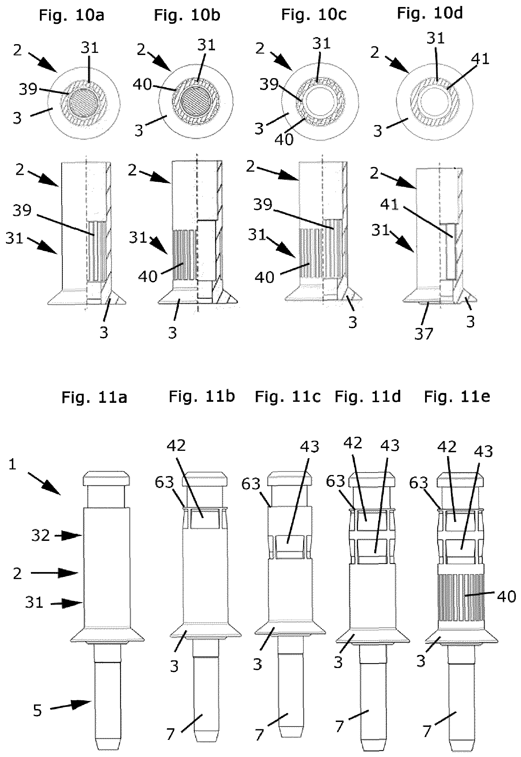

In einer Ausführungsform kann der Hohlniet 2 im Schaftbereich 31 an der Innenumfangsfläche (Fig. 10a) oder der Außenumfangsfläche (Fig. 10b) oder an der Innen- und der Außenumfangsfläche (Fig. 10c) des Hohlniets in Axialrichtung verlaufende Oberflächenstrukturen, bspw. Einkerbungen 39, 40, aufweisen, die das Einführen erleichtern und abschnittsweise eine kraftschlüssige Verbindung und/oder Kontaktierung stärken können. Fig. 10d zeigt eine Ausführungsform mit einem variablen Querschnitt 41 (polygonale Struktur) an der Innenumfangsfläche und (unabhängig davon) einem Ringabsatz 37 (Aufdickung) am Setzkopf 3. Dieses Merkmal kann in gleicher Weise auch in den Ausführungsformen der Fig. 10a bis Fig. 10c realisiert werden. Oberhalb der Seitenansichten in den Fig. 10a, bis 10d sind jeweils zugehörige Schnittdarstellungen durch den Schaftbereich 31 dargestellt. Auch können diese Merkmale zu einem Toleranzausglich bei den einzelnen Bauteilen des Blindniets 1 und der Nietstelle beitragen.

Gemäß einer Ausführungsform kann der Hohlniet 2 des Blindniets 1 im Umformbereich 32 und optional (zumindest teilweise) auch im Schaftbereich 31, verschiedene Bereiche 42, 43 unterschiedlicher Steifigkeit aufweisen, die abschnittsweise bspw. durch Einprägen in die Außenumfangsfläche des Hohlniets 2 im Umformbereich 32 und ggf. auch im Schaftbereich 31 erzeugt werden können. In den verschiedenen Bereichen 42, 43 kann die Wandstärke des Hohlniets 2 insbesondere in axialer Richtung innerhalb des Bereichs 42, 43 variieren.

In dem hier dargestellten Beispiel bilden der erste Bereich 42 in der Axialrichtung, ausgehend von der offenen Stirnseite 63 des Hohlniets 2 hin zum Setzkopf 3, eine ansteigende Rampe (Fig. 11b) und der zweite Bereich 43 in dieser Axialrichtung ein abfallende Rampe (Fig. 11c). Ein Verformen des Umformbereichs 32 durch Zug an dem Nietdorn 5 respektive dem Zugdorn 7 in dieser Axialrichtung (d.h. in dem hier dargestellten Beispiel in Richtung der Zugkraft Z) setzt bei einer freien Verformung und/oder bei kleineren Klemmlägen innerhalb des Klemmbereichs im Bereich der tiefsten Einprägung im Bereich der Rampe (also der dünnsten Wandstärke des Hohlniets 2) ein. In dieser Axialrichtung sind in der Ausführungsform gemäß Fig. 11d im Umformbereich 32 eine erste Rampe 42 und eine zweite Rampe 43 hintereinander angeordnet. Hierdurch wird der obere und der untere Umformpunkt zum Ausbilden des Schließkopfs 33 definiert vorgegeben.

Ab einer gewissen Dicke der Klemmlänge kann auch ein Ausknicken des Umformbereichs 32 an einer Öffnungskante des Fügeguts 100 beginnen, wenn sich der Bereich um die tiefste Einprägung der dem Setzkopf 3 zugewandten abfallenden Rampe 43 sich noch innerhalb der Öffnung 103 des Fügeguts 100 befindet.

Fig. 11e zeigt die Ausführungsform nach Fig. 11d mit einer zusätzlichen axialen Oberflächenstruktur, bspw. Einkerbung 40, an der Außenumfangsfläche des Hohlniets 2 im Schaftbereich 31.

Fig. 11a zeigt einen Blindniet 1 mit einem Hohlniet 2 ohne Einprägungen oder Strukturierungen am Außenumfang des Hohlniets gemäß einer Ausführungsform der Erfindung.

Die vorbeschriebenen Ausführungsformen von Nietdorn 5 und Hohlniet 2 können erfindungsgemäß miteinander und/oder mit anderen beschriebenen Ausführungsformen des Blindniets 1 in geeigneter Weise kombiniert werden, auch wenn solche Ausführungsformen nicht explizit gezeigt und/oder dargestellt sind.

### Bezugszeichenliste:

- 1: Blindniet
- 2: Hohlniet
- 3: Setzkopf
- 4: Hohlnietschaft
- 5: Nietdorn
- 6: Nietdornkopf
- 7: Zugdorn (auch als Nietdornschaft bezeichnet)
- 8: Verriegelungsbereich
- 9: Einführfase

- 30: Setzkopföffnung
- 31: Schaftbereich
- 32: Umformbereich
- 33: Schließkopf
- 34: Übergangsbereich
- 35: Verriegelungsabsatz
- 36: angeschrägter oder angeschlitzter Absatz des Verriegelungsabsatzes
- 37: Ringabsatz (Aufdickung)
- 38: separates verformbares Verriegelungselement
- 39: axiale Einkerbung (Oberflächenstruktur) an der Innenumfangsfläche des Hohlniets
- 40: axiale Einkerbung (Oberflächenstruktur) an der Außenumfangsfläche des Hohlniets
- 41: variabler Querschnitt an der Innenumfangsfläche des Hohlniets
- 42: erster Bereich unterschiedlicher Steifigkeit (erste Rampe)
- 43: zweiter Bereich unterschiedlicher Steifigkeit (zweite Rampe)

- 60: Nietdornkopfschaft
- 61: Nietdornkopfflansch
- 62: Nietdornkopfabsatz
- 63: offene Stirnseite
- 64: Einschlupfschräge
- 65: Oberflächenstruktur
- 66: rillenförmige Zacken
- 67: Hinterschnitt
- 68: Kavität
- 70: Zugdornrändel
- 71: freies Ende des Zugdorns
- 72: variabler Querschnitt des Nietdornkopfschafts
- 73: axiale Einkerbung (Oberflächenstruktur) des Nietdornkopfschafts

- 80: Verriegelungskopf
- 81: Verriegelungsnut
- 82: Verriegelungsschaft
- 83: Sollbruchstelle
- 84: Zugdornschräge
- 85: angeschrägter oder angeschlitzter Absatz des Verriegelungskopfs

- 100: Fügegut oder Befestigungsgut
- 101: erstes Fügematerial
- 102: zweites Fügematerial
- 103: Öffnung / Befestigungsöffnung

- D1: Kopfschaftdurchmesser
- D2: Verriegelungskopfdurchmesser
- D3: Verriegelungsschaftdurchmesser
- D4: Zugdorndurchmesser

- Z: Zugkraft
- G: Gegenkraft
- T: Trennkraft
- K: Klemmkraft
- R: Reibschluss

## Patentansprüche

1. Blindniet mit einem Hohlniet (2) und einem in dem Hohlniet (2) geführten Nietdorn (5),
wobei der Hohlniet (2) einen Setzkopf (3) mit einer axialen Setzkopföffnung (30) und einen sich an den Setzkopf (3) in axialer Richtung anschließenden Hohlnietschaft (4) aufweist,
wobei der Nietdorn (5) einen Nietdornkopf (6), einen sich von dem Nietdornkopf (6) in axialer Richtung erstreckenden Nietdornkopfschaft (60), einen sich in axialer Richtung erstreckenden Zugdorn (7) und einen zwischen dem Nietdornkopfschaft (60) und dem Zugdorn (7) ausgebildeten Verriegelungsbereich (8) aufweist,
wobei der Zugdorn (7) in axialer Richtung bewegbar in der Setzkopföffnung (30) geführt ist und der Setzkopf (3) und der Nietdornkopf (6) in axialer Richtung auf verschiedenen Seiten des Hohlnietschafts (4) angeordnet sind,
wobei ein Kopfschaftdurchmesser (D1) des Nietdornkopfschafts (60) größer ist als ein Innendurchmesser in einem an den Setzkopf (3) anschließenden Schaftbereich (31) des Hohlniets (2) und derart bemessen ist, dass der Nietdornkopfschaft (60) bei Ausüben einer axialen Zugkraft (Z) auf den Zugdorn (7) unter Kaltverformung von Schaftbereich (31) und/oder Nietdornkopfschaft (60) aufgrund eines radialen Drucks in den Schaftbereich (31) des Hohlniets (2) einziehbar ist, bis der Verriegelungsbereich (8) des Nietdorns (5) an und/oder in dem Setzkopf (3) des Hohlniets (2) positioniert ist,
**dadurch gekennzeichnet, dass**
der Hohlniet (2) anschließend an den Schaftbereich (31) auf der dem Setzkopf (3) abgewandten Seite einen Umformformbereich (32) zum Ausbilden eines Schließkopfs (33) aufweist, wobei eine Umformsteifigkeit des Umformbereichs (32) kleiner ist als eine Umformsteifigkeit des Schaftbereichs (31), und
der Nietdornkopf (6) an dem dem Verriegelungsbereich (8) abgewandten Ende des Nietdornkopfschafts (60) einen Nietdornkopfflansch (61) aufweist, der mit einem Nietdornkopfabsatz (62) radial nach außen von dem Nietdornkopfschaft (60) vorsteht und bei einer axialen Bewegung des Nietdorns (5) an einer offenen Stirnseite (63) des Umformbereichs (32) des Hohlnietschafts (4) angreift, um bei einem weiteren Ausüben der Zugkraft (Z) auf den Zugdorn (7) den Schließkopf (33) durch Umformen des Umformbereichs (32) auszubilden.

2. Blindniet nach Anspruch 1, **dadurch gekennzeichnet, dass** der Verriegelungsbereich (8) des Nietdorns (5) einen Verriegelungskopf (80) aufweist, wobei ein Verrieglungskopfdurchmesser (D2) kleiner ist als der Innendurchmesser im Schaftbereich (31) des Hohlniets (2) und größer ist als ein Innendurchmesser der Setzkopföffnung (30), die in dem Setzkopf (3) an einem Verriegelungsabsatz (35) anschließend an den Schaftbereich (31) des Hohlniets (2) ausgebildet ist.

3. Blindniet nach Anspruch 1 oder 2, **dadurch gekennzeichnet, dass** eine axiale Länge des Verriegelungsbereichs (8) des Nietdorns (5) einer axialen Länge der Setzkopföffnung (30) entspricht.

4. Blindniet nach einem der Ansprüche 2 oder 3, **dadurch gekennzeichnet, dass** in dem Verriegelungsbereich (8) anschließend an den Verriegelungskopf (80) eine Verriegelungsnut (81) ausgebildet ist.

5. Blindniet nach Anspruch 4, **dadurch gekennzeichnet, dass** die Verriegelungsnut (81) des Nietdorns (5) bei gesetztem Blindniet (1) in einer Radialebene angeordnet ist, die innerhalb des Fügeguts oder Befestigungsguts (100) verläuft.

6. Blindniet nach einem der vorhergehenden Ansprüche, **dadurch gekennzeichnet, dass** der Setzkopf (3) einen axial nach außen in Richtung des freien Endes des Zugdorns vorstehenden Ringabsatz (37) um die Setzkopföffnung (30) herum aufweist.

7. Blindniet nach einem der vorhergehenden Ansprüche, **dadurch gekennzeichnet, dass** an dem dem Zugdorn (7) zugewandten Ende des Verriegelungsbereichs (8) ein mechanischer Verriegelungsmechanismus vorgesehen ist, der nach dem Setzen des Blindniets (1) den Nietdorn (5) in dem Setzkopf verriegelt.

8. Blindniet nach einem der vorhergehenden Ansprüche, **dadurch gekennzeichnet, dass** am Nietdornkopf (6) im Übergang von dem Nietdornkopf (6) zu dem Nietdornkopfschaft (60) ein Hinterschnitt (67) an dem Nietdornkopfabsatz (62) und/oder eine in den Nietdornkopf (6) und/oder den Nietdornkopfschaft (60) eingreifende Nut ausgebildet ist.

9. Blindniet nach einem der vorhergehenden Ansprüche, **dadurch gekennzeichnet, dass** der Nietdorn (5) eine sich axial zumindest durch den Nietdornkopf (6) erstreckende Kavität (68) aufweist.

10. Blindniet nach Anspruch 9, **dadurch gekennzeichnet, dass** sich die Kavität (68) teilweise oder vollständig durch den Nietdornkopfschaft (60) erststreckt.

11. Blindniet nach einem vorhergehenden Ansprüche, **dadurch gekennzeichnet, dass** in einem Außenumfangsbereich des Nietdornkopfschafts (60) eine Oberflächenstruktur (65) eingearbeitet ist.

12. Blindniet nach einem der vorhergehenden Ansprüche, **dadurch gekennzeichnet, dass** auf dem Nietdornkopfschaft (60) des Nietdorns (5) zumindest abschnittsweise Klebstoff vorgesehen ist.

13. Blindniet nach einem der vorhergehenden Ansprüche, **dadurch gekennzeichnet, dass** der Hohlnietschaft (4) insbesondere im Umformbereich (32) verschiedene Bereiche (42, 43) unterschiedlicher Steifigkeit aufweist.

14. Blindniet nach einem der vorhergehenden Ansprüche, **dadurch gekennzeichnet, dass** der Hohlnietschaft (4) an einem Außenumfang und/oder an einem Innenumfang in Axialrichtung verlaufende Oberflächenstrukturen, insbesondere Einkerbungen (39, 40), und/oder einen variablen Querschnitt (41) aufweist.

15. Blindniet nach einem der vorhergehenden Ansprüche, **dadurch gekennzeichnet, dass** der Nietdornkopfschaft (60) an einem Außenumfang in Axialrichtung verlaufende Oberflächenstrukturen, insbesondere Einkerbungen (73), und/oder einen variablen Querschnitt (72) aufweist.
